# EUROPEAN PATENT APPLICATION

(11) **EP 4 255 067 A1**
(43) Date of publication of application: **04.10.2023**
(21) Application number: 21897782.5
(22) Date of filing: 16.11.2021
(51) Int. Cl.: H04W 72/04, H04B 17/318, H04W 28/18

(54) **COMMUNICATION DEVICE, COMMUNICATION METHOD, AND COMMUNICATION SYSTEM**

(30) Priority: 25.11.2020 JP 2020195379
(71) Applicant: Sony Group Corporation, Tokyo 108-0075 (JP)
(72) Inventor: TSUDA, Shinichiro, Tokyo 108-0075 (JP); MATSUDA, Hiroki, Tokyo 108-0075 (JP)
(74) Representative: Witte, Weller & Partner Patentanwälte mbB
(86) International application number: PCT/JP2021/041988
(87) International publication number: WO 2022/113808

(57) **Abstract**

A communication device includes an acquisition unit that acquires, from another communication device, information concerning a second resource configured from a plurality of first resources and a discrimination unit that discriminates, based on the information concerning the second resource, signal processing parameters including information concerning at least one of a modulation scheme, an encoding method, and a number of layers applied for each of the first resources.

## Description

### Field

The present disclosure relates to a communication device, a communication method, and a communication system.

### Background

With an increase in communication demands due to the progress of the communication technology, depletion of radio wave resources has become a problem. In recent years, various use cases in which a next generation radio access technology (RAT) such as (NR) New Radio is used have been proposed. Efficient use of frequencies is important to secure sufficient resources in systems as well.

### Citation List

### Patent Literature

Patent Literature 1: JP 2013-157695 A
Patent Literature 2: JP 2020-99091 A

### Summary

### Technical Problem

In 3GPP, as a modulation scheme, an encoding method, and the number of layers, predetermined values corresponding to predetermined radio quality are decided. In the related art, a common modulation scheme, a common encoding method, and a common number of layers have been used for a plurality of time-axis multiplexed radio resources (for example, a plurality of resource blocks and a plurality of RBGs (Resource Block Groups). However, since radio quality can differ from time to time, if the common modulation scheme, the common encoding method, and the common number of layers are used for the plurality of radio resources, a value obtained by sufficiently considering the radio quality cannot be used. A modulation method with low frequency use efficiency is sometimes applied to a frequency band in which a modulation method with high frequency use efficiency can be used. In this case, the frequency use efficiency decreases more than necessary.

Therefore, the present disclosure proposes a communication device, a communication method, and a communication system capable of efficiently using frequencies.

Note that the problem or the object described above is merely one of a plurality of problems or objects that can be solved or achieved by a plurality of embodiments disclosed in the present specification.

### Solution to Problem

In order to solve the above problem, a communication device according to one aspect of the present disclosure includes: an acquisition unit that acquires, from another communication device, information concerning a second resource configured from a plurality of first resources; and a discrimination unit that discriminates, based on the information concerning the second resource, signal processing parameters including information concerning at least one of a modulation scheme, an encoding method, and a number of layers applied to each of the first resources.

### Brief Description of Drawings

FIG. 1 is an example of an MCS table for PDSCH defined in NR.
FIG. 2A is a diagram illustrating an example of a relation between a propagation channel and radio resource allocation.
FIG. 2B is a diagram illustrating an example of the relation between the propagation channel and the radio resource allocation.
FIG. 3 is a diagram illustrating a configuration example of a communication system according to an embodiment of the present disclosure.
FIG. 4 is a diagram illustrating a configuration example of a management device according to the embodiment of the present disclosure.
FIG. 5 is a diagram illustrating a configuration example of a base station according to the embodiment of the present disclosure.
FIG. 6 is a diagram illustrating a configuration example of a relay station according to the embodiment of the present disclosure.
FIG. 7 is a diagram illustrating a configuration example of a terminal device according to the embodiment of the present disclosure.
FIG. 8 is a configuration example of an arithmetic unit of the base station.
FIG. 9 is a configuration example of an arithmetic unit of the terminal device.
FIG. 10A is an example of setting of an order, a code rate, and the number of layers of a modulation scheme.
FIG. 10B is an example of the setting of the order, the code rate, and the number of layers of the modulation scheme.
FIG. 11 is a flowchart illustrating an example of transmission processing of a base station according to a first embodiment.
FIG. 12 is a flowchart illustrating an example of reception processing of a terminal device according to the first embodiment.
FIG. 13 is a flowchart illustrating an example of reception processing of a terminal device according to a second embodiment.
FIG. 14 is a flowchart illustrating an example of reception processing of a terminal device according to a third embodiment.
FIG. 15 is a flowchart illustrating an example of reception processing of a terminal device according to a fourth embodiment.
FIG. 16A is a diagram illustrating a relation between mobility and a propagation channel.
FIG. 16B is a diagram illustrating a relation between the mobility and the propagation channel.
FIG. 17 is a flowchart illustrating an example of transmission processing of a base station according to a fifth embodiment.

### Description of Embodiments

Embodiments of the present disclosure are explained in detail below with reference to the drawings. Note that, in the embodiment explained below, redundant explanation is omitted by denoting the same parts with the same reference numerals and signs.

In the present specification and the drawings, a plurality of components having substantially the same functional configuration may be distinguished by adding different numbers after the same reference signs. For example, a plurality of components having substantially the same functional configuration are distinguished as terminal devices 40₁, 40₂, and 40₃ according to necessity. However, when it is not particularly necessary to distinguish each of a plurality of components having substantially the same functional configuration, only the same reference numeral is added. For example, when it is unnecessary to particularly distinguish the terminal devices 40₁, 40₂, and 40₃, the terminal devices 40₁, 40₂, and 40₃ are simply referred to as terminal devices 40.

One or a plurality of embodiments (including examples and modifications) explained below can be respectively implemented independently. On the other hand, at least a part of the plurality of embodiments explained below may be implemented in combination with at least a part of other embodiments as appropriate. These plurality of embodiments can include new characteristics different from one another. Therefore, these plurality of embodiments can contribute to solving subjects or problems different from one another and can achieve different effects.

The present disclosure is explained according to the following item order.
1. Overview
2. Configuration of a communication system
   2-1. Overall configuration of the communication system
   2-2. Configuration of a management Device
   2-3. Configuration of a base station
   2-4. Configuration of a relay station
   2-5. Configuration of a terminal device
3. Configuration example of an arithmetic unit
   3-1. Configuration example of an arithmetic unit of the base station
   3-2. Configuration example of an arithmetic unit of the terminal device
4. Processing in the present embodiment
   4-1. Overview of the processing
   4-2. First Embodiment
   4-3. Second Embodiment
   4-4. Third Embodiment
   4-5. Fourth Embodiment
   4-6. Fifth Embodiment
5. Modifications
6. Conclusion

### <<1. Overview>>

### <1-1. Overview of problems>

Radio access technologies (RATs) such as LTE (Long Term Evolution) and NR (New Radio) have been studied in the 3GPP (3rd Generation Partnership Project). The LTE and the NR are types of a cellular communication technology and enable mobile communication of a terminal device by arranging, in a cell shape, a plurality of areas covered by a base station. At this time, a single base station may manage a plurality of cells.

Note that, in the following explanation, it is assumed that "LTE" includes LTE-A (LTE-Advanced), LTE-A Pro (LTE-Advanced Pro), and EUTRA (Evolved Universal Terrestrial Radio Access). The NR includes NRAT (New Radio Access Technology) and FEUTRA (Further EUTRA). Note that a single base station may manage a plurality of cells. In the following explanation, a cell adapted to the LTE is referred to as LTE cell and a cell adapted to the NR is referred to as NR cell.

The NR is a next generation (fifth generation: 5G) radio access technology (RAT) of the LTE. The NR is a radio access technology that can cope with various use cases including eMBB (Enhanced Mobile Broadband), mMTC (Massive Machine Type Communications), and URLLC (Ultra-Reliable Low Latency Communications). The NR has been studied aiming at a technical framework adapted to use scenarios, requirement conditions, arrangement scenarios, and the like in these use cases. In the 5G, utilization of a millimeter wave band in which a wide band can be secured is expected. The 5G is expected to be utilized in industries other than telecoms called vertical, for example, the manufacturing industry and is expected to be further expanded concerning ultra-high speed or low delay and high reliability.

In the 5G, transmission of 4K or 8K moving images is expected because of characteristics such as ultra-high speed, low delay and high reliability, and multiple simultaneous connections. In the future, it is desired to further improve the characteristics such as ultra-high speed, low delay and high reliability, and multiple simultaneous connection toward Beyond 5G and the 6G. An operation in a terahertz band in which a wider band can be secured is also considered.

Although more frequency resources are allocated to kinds of UE (User Equipment). However, further efficient use of frequencies is indispensable for further improvement of the characteristics such as ultra-high speed, low delay, high reliability, and multiple simultaneous connection. However, in the conventional method, further efficient use of frequencies is not always realized.

For further efficient use of the frequency, it is conceivable to change a signal processing method (for example, a modulation method and coding) according to a state of a propagation channel. For example, in the conventional technique, it is possible to change an MCS (Modulation and Coding Scheme) in units of TB (Transport Block). However, in the case of this method, when reception quality greatly changes in a frequency resource allocated to one TB, a base station has to select an MCS according to low reception quality in the frequency resource, although there is room to apply the MCS with high frequency use efficiency. Then, frequency use efficiency is deteriorated.

Note that, in the related art, the MCS is notified by DCI (Downlink Control Information) via a PDCCH (Physical Downlink Control Channel). In one DCI, the MCS is notified as one of kinds of information concerning a TB corresponding to each of at most two codewords. That is, only the MCS applied in TB units is notified concerning TBs. If it is attempted to allocate more frequency resources and apply a plurality of MCSs according to reception quality in the allocated frequency resources, there is a concern about an increase in an overhead of information notified by the DCI.

### <1-2. Details of the problem>

The problem described above is explained more in detail below.

A PDSCH (Physical downlink shared channel) is a physical channel for transmitting user data (downlink data) in a downlink. A PDCCH (Physical Downlink Control Channel) is a physical channel for transmitting control information in the downlink and is used to, for example, schedule downlink data of the PDSCH.

DCI (Downlink Control Information) is sent via the PDCCH and used to dynamically or semi-persistently allocate radio resources. For example, in a DCI format 1_1 used to dynamically allocate radio resources, a Bandwidth part indicator, Frequency domain resource assignment, Time domain resource assignment, CBGTI (CBG transmission information), Antenna port(s), an MCS (Modulation and Coding Scheme) concerning a Transport block 1, New data indicator, and, RV (Redundancy Version), an MCS concerning a Transport block 2, New data indicator, and, RV are notified.

In NR (New Radio), which is a general term for radio units of 5G, since a bandwidth per one carrier (component carrier) increases, a mechanism called BWP (Bandwidth Part) is introduced such that a UE supporting only a narrow bandwidth can communicate via the carrier. One or more BWPs can be set for the component carrier. However, at a certain point in time, only one BWP is active.

A Bandwidth part indicator is an indicator for notifying the UE of the BWP-Id in order to identify one BWP from a plurality of set BWPs.

The frequency domain resource assignment is for notifying information concerning resource allocation in a frequency domain. As resource application, there are two types including a resource allocation type 0 and a resource allocation type 1.

In the resource allocation type 0, information concerning a bitmap indicating an RBG (Resource Block Group) allocated to the UE is notified. Here, the RBG is a set of RBs (Resource Blocks) and is defined by rbg-Size which is a parameter of an upper layer set by sizes of PDSCH-Config and BWP.

In the resource allocation type 1, an RIV (Resource Indication Value) equivalent to RB_{Start}, which is an RB of a starting point in consecutive RBs allocated to the UE, and L_{RBs}, which is an RB length, are notified.

Time domain resource assignment notifies information concerning resource allocation in a time domain. The information concerning the resource allocation is 4-bit information indicating one of columns of a look-up table for reference. That is, one column of sixteen columns is notified to the UE. The UE acquires, based on a designated column of the reference table, information concerning parameters of K₀, which is an offset of a slot, an SLIV (Start and Length Indicator Value), or a symbol S serving as a starting point, an allocation length L, and a PDSCH mapping type.

The UE is set to receive code block based transmission data from the base station by receiving codeBlockGroupTransmission for PDSCH, which is a higher layer parameter. In the 5G NR, a large size TB (Transport Block) is divided into CBs (Code Blocks) and the CBs are further grouped as CBGs (Code Block Groups). Since the UE can decode the CBGs and return an HARQ (Hybrid Automatic Repeat Request) for each of the CBGs, the base station can perform retransmission in small CBG units rather than TB units of a large size.

The CBGTI is configured from a bit length of N_{TB}*N bits, where N_{TB} is a value of maxNrofCodeWordsScheduledByDCI, which is a parameter of an upper layer. When the N_{TB} is 2, bits of a CBGTI field are allocated such that a first set of N bits starting from the most significant bit (MSB) corresponds to a first TB and a second set of N bits corresponds to a second TB.

First M bits of the N bits of each of the sets of the CBGTI field have a one-to-one correspondence with M CBGs of the TB as ordered. Note that the MSB corresponds to a CBG # 0. In first transmission of the TB notified in a New Data Indicator field of the DCI, the UE considers that there are all CBGs of the TB.

In the retransmission of the TB notified by the New Data Indicator field of the DCI, the UE considers that the CBGTI field of the DCI indicates which CBG of the TB is included in transmission data. For example, the UE determines that, when bits of the CBGTI field are "0", a CBG corresponding to the bits has not been transmitted or, when the bits are "1", the corresponding CBG has been transmitted and this CBG includes the same CBG as the first transmission of the TB.

An antenna port (s) notifies the UE of information for specifying the antenna port(s) and the number of layers. The UE can specify, based on a bit field length (Bit Field Length) of the notified information and two RRC (Radio Resource Control) parameters including dmrs-Type and maxLength relating to a DMRS (DeModulation Reference Signal), a table to be referred to and specify, based on the information notified as the antenna port (s), the antenna port and the number of layers from a DMRS port (s) of the reference table.

The UE considers that a modulation symbol having a complex value for each codeword to be transmitted is mapped to one or a plurality of layers among a maximum of eight layers. In the case of one to four layers, one codeword is mapped to each layer and, in the case of five to eight layers, two codewords are mapped to each of the layers. Here, one MCS is applied to each of code words. The MCS applied to each code word is notified to the UE as an MCS concerning the Transport block 1 and an MCS concerning a Transport block 2 included in the DCI format 1_1.

As in the LTE, applied modulation coding is adopted in the NR. The applied modulation coding is known as a method of improving frequency use efficiency by applying an optimum modulation scheme and coding according to a dynamic channel state. In the NR, thirty-two combinations of modulation schemes (Modulation) and coding are defined as MCSs (Modulation and Coding Schemes).

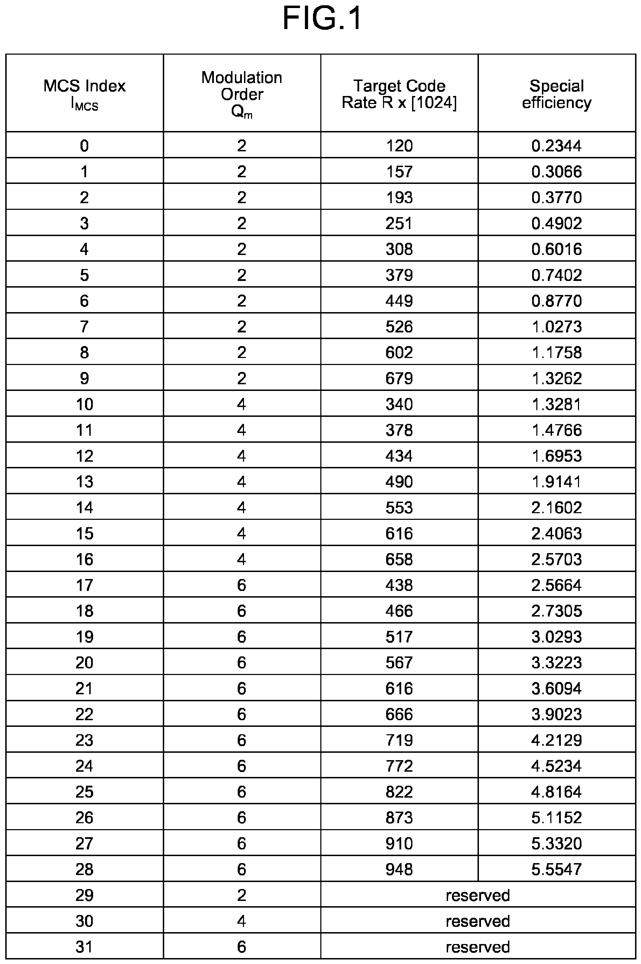

FIG. 1 is an example of an MCS table for PDSCH defined in the NR. In the MCS table illustrated in FIG. 1, combinations of modulation schemes and coding are defined. The combinations of the modulation schemes and the coding can be identified by MCS indexes. For radio resources with poor channel states, the base station applies an MCS corresponding to a smaller value index, that is, a lower order modulation scheme and a lower code rate. On the other hand, for a radio resource with a good channel state, the base station applies an MCS corresponding to a larger value index, that is, a higher order modulation scheme and a higher code rate. Consequently, trade-off between a reduction of errors in transmission and improvement of frequency use efficiency is realized.

A TBS (Transport Block Size) is uniquely determined by an MCS (that is, an order (Qₘ) of a modulation scheme, a code rate (R)), and the number of layers (v). The base station allocates a necessary number of RBs (Resource Blocks) as radio resources for sending data of the TBS to the UE. Note that the information concerning the RB allocation is notified to the UE by frequency domain resource assignment and time domain resource assignment of the DCI as explained above. That is, one MCS is applied to, in units of codewords, an RB allocated to the UE in one DCI.

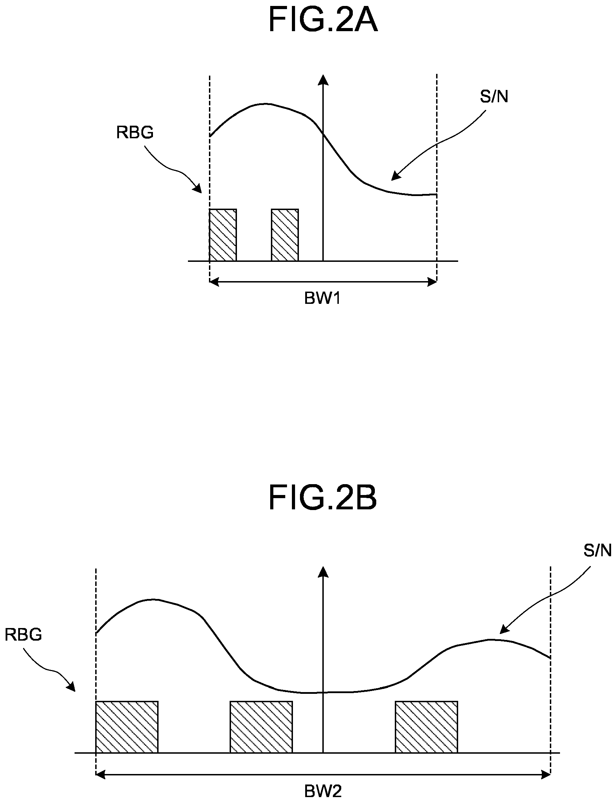

FIG. 2A and FIG. 2B are diagrams illustrating examples of a relation between a propagation channel and radio resource allocation. FIG. 2A is an example of a case in which an operating band of the UE is narrow. FIG. 2B is an example of a case in which the operating band of the UE is wide. Here, the operating band of the UE is a system band or a band of an active BWP. If a wider operating band is set for the UE, the base station can allocate a wide band RBG such that more data can be transmitted. Note that the propagation channel can be considered to be a characteristic of a reception S/N at each frequency over frequencies.

When a plurality of UEs are multiple-connected, the base station determines allocation of radio resources to UEs considering a propagation channel different for each of the UEs. More specifically, the base station allocates RBGs (Resource Block Groups) located in frequency domains with good propagation channels to the UEs as much as possible. For example, in the case of FIG. 2A, the base station allocates an RBG configured by two resources to the UE and, in the case of FIG. 2B, the base station allocates an RBG configured by three resources to the UE. Note that hatched blocks illustrated in FIG. 2A and FIG. 2B respectively indicate resources configured by continuous REs (Resource Elements).

As explained above, in the case of FIG. 2A, the band of the RBG is relatively narrow. Therefore, a change in the reception S/N of the RE in the RBG is small. On the other hand, in the case of FIG. 2B, the band of the RBG is relatively wide. Therefore, the change in the reception S/N of the RE in the RBG increases. Accordingly, when one MCS is allocated to the RBG, the MCS is determined according to an RE having the worst S/N in the band of the RBG. Therefore, in the case of FIG. 2B, the frequency use efficiency of another RE having the best S/N is sacrificed.

### <1-3. Solution>

Therefore, in the present embodiment, a signal processing method (for example, a modulation method and coding) can be changed in any units according to reception quality that changes in the frequency resources. For example, in the related art, the MCS is applied in TB (Transport Block) units. However, the MCS is enabled to be set in units smaller than the TB. Consequently, even if the reception quality greatly changes in frequency resources allocated to one TB, the MCS can be changed in units smaller than the TB. Therefore, more efficient use of frequencies is realized.

Although the overview of the present embodiment is explained above, the communication system according to the present embodiment is explained in detail below.

### <<2. Configuration of the communication system>>

A configuration of a communication system 1 is specifically explained below with reference to the drawings.

### <2-1. Overall configuration of the communication system>

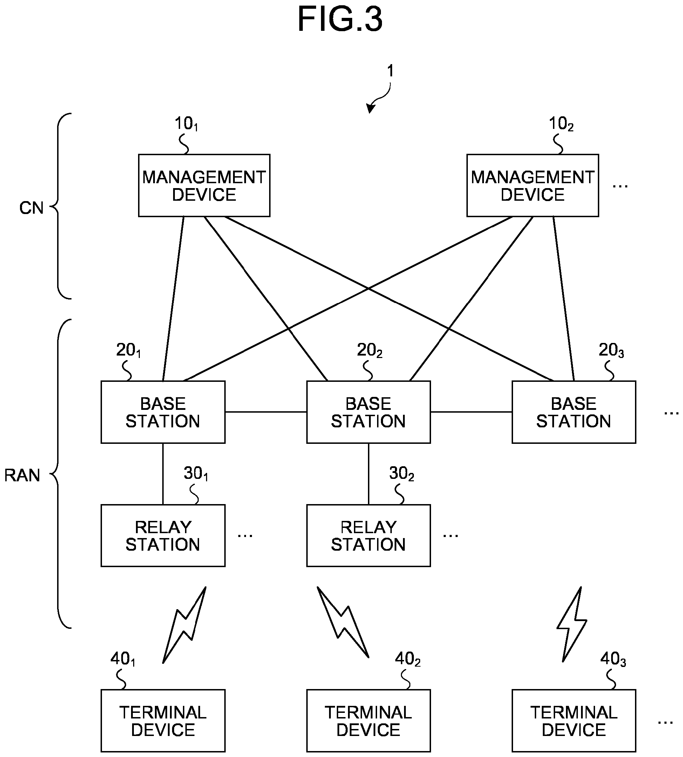

FIG. 3 is a diagram illustrating a configuration example of the communication system 1 according to the embodiment of the present disclosure. The communication system 1 includes a management device 10, a base station 20, a relay station 30, and a terminal device 40. Wireless communication devices configuring the communication system 1 operate in cooperation to provide a user with a wireless network capable of performing mobile communication. The wireless network in the present embodiment is configured by, for example, a radio access network and a core network. Note that, in the present embodiment, the wireless communication devices are devices having a function of wireless communication. In the example illustrated in FIG. 3, the base station 20, the relay station 30, and the terminal device 40 correspond to the wireless communication devices.

The communication system 1 may include a plurality of management devices 10, a plurality of base stations 20, a plurality of relay stations 30, and a plurality of terminal devices 40. In the example illustrated in FIG. 3, the communication system 1 includes management devices 10₁ and 10₂ and the like as the management device 10 and includes base stations 20₁ and 20₂ and the like as the base station 20. The communication system 1 includes relay stations 30₁ and 30₂ and the like as the relay station 30 and includes terminal devices 40₁, 40₂, and 40₃ and the like as the terminal device 40.

Note that the devices in the figures may be considered devices in a logical sense. That is, a part of the devices in the drawings may be realized by a virtual machine (VM), a container (Container), a docker (Docker), and the like and may be implemented on physically the same hardware.

Note that the communication system 1 may support a radio access technology (RAT) such as LTE (Long Term Evolution) and NR (New Radio). The LTE and the NR are types of a cellular communication technology and enable mobile communication of a terminal device by arranging, in a cell shape, a plurality of areas covered by a base station.

Note that the radio access scheme used by the communication system 1 is not limited to the LTE and the NR and may be another radio access scheme such as W-CDMA (Wideband Code Division Multiple Access) or cdma2000(Code Division Multiple Access 2000).

The base station or the relay station configuring the communication system 1 may be a ground station or a non-ground station. The non-ground station may be a satellite station or an aircraft station. If the non-ground station is a satellite station, the communication system 1 may be a Bent-pipe (Transparent) type mobile satellite communication system.

Note that, in the present embodiment, the ground station (also referred to as ground base station) refers to a base station (including a relay station) installed on the ground. Here, the "ground" is a ground in a broad sense including not only the land but also underground, on water, and underwater. Note that, in the following explanation, the description of "ground station" may be replaced with "gateway".

Note that an LTE base station is sometimes referred to as eNodeB (Evolved Node B) or eNB. An NR base station is sometimes referred to as gNodeB or gNB. In the LTE and the NR, a terminal device (also referred to as a mobile station or a terminal) is sometimes referred to as UE (User Equipment). Note that the terminal device is a type of a communication device and is also referred to as a mobile station or a terminal.

In the present embodiment, the concept of the communication device includes not only a portable mobile device (terminal device) such as a portable terminal but also a device installed in a structure or a mobile body. The structure or the mobile body itself may be regarded as the communication device. The concept of the communication device includes not only a terminal device but also a base station and a relay station. The communication device is a type of a processing device and an information processing device. The communication device can be replaced with transmission device or reception device.

In the following explanation, configurations of the devices configuring the communication system 1 are specifically explained. Note that the configurations of the devices explained below are merely an example. The configurations of the devices may be different from the configurations explained below.

### <2-2. Configuration of the management device>

Subsequently, a configuration of the management device 10 is explained.

The management device 10 is a device that manages a wireless network. For example, the management device 10 is a device that manages communication of the base station 20. If a core network is an EPC (Evolved Packet Core), the management device 10 is, for example, a device having a function of an MME (Mobility Management Entity). If the core network is a 5GC (5G Core network), the management device 10 is, for example, a device having a function of an AMF (Access and Mobility Management Function) and/or an SMF (Session Management Function). Naturally, the functions of the management device 10 are not limited to the MME, the AMF, and the SMF. For example, if the core network is the 5GC, the management device 10 may be a device having a function of an NSSF (Network Slice Selection Function), an AUSF (Authentication Server Function), or a UDM (Unified Data Management). The management device 10 may be a device having a function of an HSS (Home Subscriber Server).

Note that the management device 10 may have a function of a gateway. For example, if the core network is the EPC, the management device 10 may have a function of an S-GW (Serving Gateway) or a P-GW (Packet Data Network Gateway). If the core network is the 5GC, the management device 10 may have a function of a UPF (User Plane Function).

The core network is configured from a plurality of network functions. The network functions may be aggregated into one physical device or distributed to a plurality of physical devices. That is, the management device 10 can be dispersedly disposed in a plurality of devices. Further, this distributed disposition may be controlled to be dynamically executed. The base station 20 and the management device 10 configure one network and provide a wireless communication service to the terminal device 40. The management device 10 is connected to the Internet. The terminal device 40 can use, via the base station 20, various services provided via the Internet.

Note that the management device 10 may not always be a device configuring the core network. For example, it is assumed that the core network is a core network of W-CDMA (Wideband Code Division Multiple Access) or cdma2000 (Code Division Multiple Access 2000). At this time, the management device 10 may be a device that functions as an RNC (Radio Network Controller).

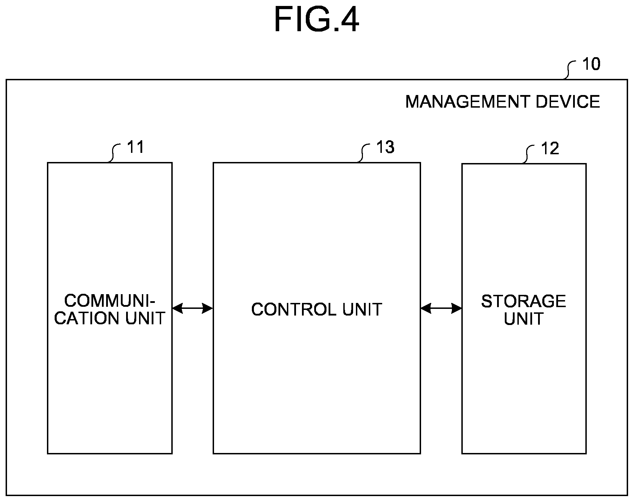

FIG. 4 is a diagram illustrating a configuration example of the management device 10 according to the embodiment of the present disclosure. The management device 10 includes a communication unit 11, a storage unit 12, and a control unit 13. Note that the configuration illustrated in FIG. 4 is a functional configuration. A hardware configuration may be different from this configuration. The functions of the management device 10 may be statically or dynamically distributed and implemented in a plurality of physically separated components. For example, the management device 10 may configured by a plurality of server devices.

The communication unit 11 is a communication interface for communicating with other devices. The communication unit 11 may be a network interface or may be a device connection interface. For example, the communication unit 11 may be a LAN (Local Area Network) interface such as an NIC (Network Interface Card) or may be a USB interface configured by a USB (Universal Serial Bus) host controller, a USB port, and the like. The communication unit 11 may be a wired interface or may be a wireless interface. The communication unit 11 functions as communication means of the management device 10. The communication unit 11 communicates with the base station 20 and the like according to control of the control unit 13.

The storage unit 12 is a data readable/writable storage device such as a DRAM (Dynamic Random Access Memory), an SRAM (Static Random Access Memory), a flash memory, or a hard disk. The storage unit 12 functions as storage means of the management device 10. The storage unit 12 stores, for example, a connection state of the terminal device 40. For example, the storage unit 12 stores a state of RRC (Radio Resource Control) or a state of ECM (EPS Connection Management) or 5G System CM (Connection Management) of the terminal device 40. The storage unit 12 may function as a home memory that stores position information of the terminal device 40.

The control unit 13 is a controller that controls the units of the management device 10. The control unit 13 is realized by a processor such as a CPU (Central Processing Unit) or an MPU (Micro Processing Unit). For example, the control unit 13 is realized by the processor executing various programs stored in a storage device inside the management device 10 using a RAM (Random Access Memory) or the like as a work area. Note that the control unit 13 may be realized by an integrated circuit such as an ASIC (Application Specific Integrated Circuit) or an FPGA (Field Programmable Gate Array). All of the CPU, the MPU, the ASIC, and the FPGA can be regarded as a controller.

### <2-3. Configuration of the base station>

Subsequently, a configuration of the base station 20 is explained.

The base station 20 is a wireless communication device that performs wireless communication with the terminal device 40. The base station 20 may be configured to wirelessly communicate with the terminal device 40 via the relay station 30 or may be configured to directly wirelessly communicate with the terminal device 40.

The base station 20 is a type of a communication device. More specifically, the base station 20 is a device equivalent to a radio base station (Base Station, Node B, eNB, gNB, or the like) or a wireless access point. The base station 20 may be a wireless relay station. The base station 20 may be an optical extension device called RRH (Remote Radio Head). The base station 20 may be a receiving station such as an FPU (Field Pickup Unit). The base station 20 may be an IAB (Integrated Access and Backhaul) donor node or an IAB relay node that provides a radio access line and a radio backhaul line with time division multiplexing, frequency division multiplexing, or space division multiplexing.

Note that a radio access technology used by the base station 20 may be a cellular communication technology or a wireless LAN technology. Naturally, the radio access technology used by the base station 20 is not limited the above and may be another radio access technology. For example, the radio access technology used by the base station 20 may be a LPWA (Low Power Wide Area) communication technology. Naturally, wireless communication used by the base station 20 may be wireless communication using millimeter waves. The wireless communication used by the base station 20 may be wireless communication using radio waves or wireless communication (optical wireless) using infrared rays or visible light.

The base station 20 may be capable of performing NOMA (Non-Orthogonal Multiple Access) communication with the terminal device 40. Here, the NOMA communication is communication (transmission, reception, or both of transmission and reception) using a non-orthogonal resource. Note that the base station 20 may be capable of performing the NOMA communication with the other base stations 20.

Note that the base stations 20 may be capable of communicating with each other via a base station-core network interface (for example, S1 Interface). This interface may be either wired or wireless. The base stations may be capable of communicating with each other via an inter-base station interface (for example, X2 Interface or S1 Interface). This interface may be either wired or wireless.

Note that the base stations 20 may be capable of communicating with one another via a base station-core network interface (for example, NG Interface or S1 Interface). This interface may be either wired or wireless. The base stations may be capable of communicating with one another via an inter-base station interface (for example, Xn Interface or X2 Interface). This interface may be either wired or wireless.

Note that the concept of the base station (also referred to as base station device) includes not only a donor base station but also a relay base station (also referred to as relay station or relay station). The concept of the base station includes not only a structure having a function of the base station but also a device installed in the structure.

The structure is a building such as a high-rise building, a house, a steel tower, a station facility, an airport facility, a harbor facility, an office building, a school building, a hospital, a factory, a commercial facility, or a stadium. Note that the concept of the structure includes not only a building but also a structure (a non-building structure) such as a tunnel, a bridge, a dam, a wall, or an iron pillar and equipment such as a crane, a gate, or a windmill. The concept of the structure includes not only a structure on the land (the ground in a narrow sense) or underground but also a structure on water such as a platform or a mega-float, and a structure underwater such as a marine observation facility. The base station may be replaced with information processing device.

The base station 20 may be a donor station or a relay station (a relay station). The base station 20 may be a fixed station or a mobile station. The mobile station is a wireless communication device (for example, a base station) configured to be movable. At this time, the base station 20 may be a device installed in a mobile body or may be the mobile body itself. For example, a relay station having mobility can be regarded as the base station 20 functioning as a mobile station. A device originally having a mobile capability and implemented with a function of a base station (at least a part of the function of the base station) such as a vehicle, a UAV (Unmanned Aerial Vehicle) represented by a drone, or a smartphone also corresponds to the base station 20 functioning as a mobile station.

Here, the mobile body may be a mobile terminal such as a smartphone or a cellular phone. The mobile body may be a mobile body (for example, a vehicle such as an automobile, a bicycle, a bus, a truck, a motorcycle, a train, or a linear motor car) that moves on the land (the ground in a narrow sense) or a mobile body (for example, a subway) that moves underground (for example, in a tunnel).

In addition, the mobile body may be a mobile body (for example, a ship such as a passenger ship, a cargo ship, or a hovercraft) that moves on water or a mobile body (for example, a submersible such as a submersible ship, submarine, or an unmanned submersible) that moves under water.

Note that the mobile body may be a mobile body (for example, an aircraft such as an airplane, an airship, or a drone) that moves in the atmosphere.

The base station 20 may be a ground base station (a ground station) installed on the ground. For example, the base station 20 may be a base station disposed in a structure on the ground or may be a base station installed in a mobile body moving on the ground. More specifically, the base station 20 may be an antenna installed in a structure such as a building and a signal processing device connected to the antenna. Naturally, the base station 20 may be the structure or the mobile body itself. The "ground" is a ground in a broad sense including not only on the land (on the ground in a narrow sense) but also underground, on water, and underwater. Note that the base station 20 is not limited to the ground base station. For example, when the communication system 1 is a satellite communication system, the base station 20 may be an aircraft station. From the perspective of a satellite station, an aircraft station located on the earth is a ground station.

Note that the base station 20 is not limited to the ground base station. The base station 20 may be a non-ground base station device (a non-ground station) capable of floating in the air or the space. For example, the base station 20 may be an aircraft station or a satellite station.

The satellite station is a satellite station capable of floating outside the atmosphere. The satellite station may be a device loaded on a space mobile body such as an artificial satellite or may be the space mobile body itself. The space mobile body is a mobile body that moves outside the atmosphere. Examples of the space mobile body include artificial celestial bodies such as an artificial satellite, a spacecraft, a space station, and a probe.

Note that a satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Naturally, the satellite station may be a device loaded on the low earth orbiting satellite, the middle earth orbiting satellite, the geostationary earth orbiting satellite, or the high elliptical orbiting satellite.

The aircraft station is a wireless communication device capable of floating in the atmosphere such as an aircraft. The aircraft station may be a device loaded on an aircraft or the like or may be the aircraft itself. Note that the concept of the aircraft includes not only a heavy aircraft such as an airplane and a glider but also a light aircraft such as a balloon and an airship. The concept of the aircraft includes not only the heavy aircraft and the light aircraft but also a rotorcraft such as a helicopter and an auto-gyroscope. Note that the aircraft station (or an aircraft on which the aircraft station is loaded) may be an unmanned aircraft such as a drone.

Note that the concept of the unmanned aircraft also includes an unmanned aircraft system (UAS) and a tethered UAS. The concept of the unmanned aircraft includes a Lighter than Air UAS (LTA) and a Heavier than Air UAS (HTA). Besides, the concept of the unmanned aircraft also includes High Altitude UAS Platforms (HAPs).

The size of the coverage of the base station 20 may be a large size such the size of as a macro cell or the size of a small cell such as the size of a picocell. Naturally, the size of the coverage of the base station 20 may be an extremely small size such as the size of a femtocell. The base station 20 may have a beamforming capability. In this case, a cell or a service area may be formed in the base station 20 for each beam. For this purpose, the base station 20 may be equipped with an antenna array configured from a plurality of antenna elements and may be configured to provide an Advanced Antenna Technology represented by MIMO (Multiple Input Multiple Output) and beamforming.

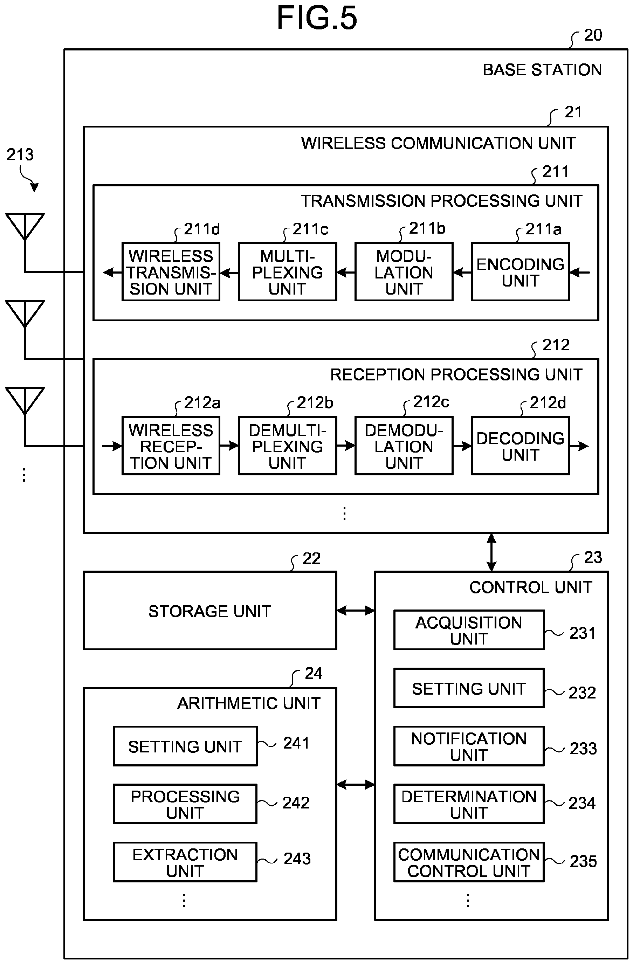

FIG. 5 is a diagram illustrating a configuration example of the base station 20 according to the embodiment of the present disclosure. The base station 20 includes a wireless communication unit 21, a storage unit 22, a control unit 23, and an arithmetic unit 24. Note that the configuration illustrated in FIG. 5 is a functional configuration. A hardware configuration may be different from this configuration. The functions of the base station 20 may be implemented in a distributed manner in a plurality of physically separated components.

The wireless communication unit 21 is a signal processing unit for wirelessly communicating with other wireless communication devices (for example, the terminal device 40). The wireless communication unit 21 operates under the control of the control unit 23. The wireless communication unit 21 is adapted to one or a plurality of radio access schemes. For example, the wireless communication unit 21 is adapted to both of the NR and the LTE. The wireless communication unit 21 may be adapted to W-CDMA or cdma 2000 in addition to the NR and the LTE. The wireless communication unit 21 may be adapted to an automatic retransmission technology such as HARQ (Hybrid Automatic Repeat Request).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, when the wireless communication unit 21 is adapted to a plurality of radio access schemes, the units of the wireless communication unit 21 can be configured individually for each of the radio access schemes. For example, the transmission processing unit 211 and the reception processing unit 212 may be individually configured by the LTE and the NR. The antenna 213 may be configured by a plurality of antenna elements (for example, a plurality of patch antennas). In this case, the wireless communication unit 21 may be configured to be capable of performing beamforming. The wireless communication unit 21 may be configured to be capable of performing polarization beamforming using vertically polarized waves (V-polarized waves) and horizontally polarized waves (H-polarized waves) .

The transmission processing unit 211 performs transmission processing for downlink control information and downlink data. For example, the transmission processing unit 211 encodes the downlink control information and the downlink data input from the control unit 23 using an encoding scheme such as block encoding, convolutional encoding, turbo encoding, or the like. Here, as the encoding, encoding by a polar code or encoding by an LDPC code (Low Density Parity Check Code) may be performed. Then, the transmission processing unit 211 modulates encoded bits with a predetermined modulation scheme such as BPSK, QPSK, 16QAM, 64QAM, or 256QAM. In this case, signal points on a constellation do not always need to be equidistant. The constellation may be a non uniform constellation (NUC). Then, the transmission processing unit 211 multiplexes modulation symbols of channels and a downlink reference signal and arranges the multiplexed symbols and the multiplexed downlink reference signal in a predetermined resource element. Then, the transmission processing unit 211 performs various kinds of signal processing on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 211 is transmitted from the antenna 213.

The reception processing unit 212 processes an uplink signal received via the antenna 213. For example, the reception processing unit 212 performs down-conversion, removal of an unnecessary frequency component, control of an amplification level, quadrature demodulation, conversion into a digital signal, removal of a guard interval (cyclic prefix), extraction of a frequency domain signal by fast Fourier transform, and the like on the uplink signal. Then, the reception processing unit 212 separates uplink channels such as a PUSCH (Physical Uplink Shared Channel) and a PUCCH (Physical Uplink Control Channel) and an uplink reference signal from the signals subjected to these kinds of processing. The reception processing unit 212 demodulates a reception signal using a modulation scheme such as BPSK (Binary Phase Shift Keying) or QPSK (Quadrature Phase Shift Keying) on modulation symbols of the uplink channels. The modulation scheme used for the demodulation may be 16QAM (Quadrature Amplitude Modulation), 64QAM, or 256QAM. In this case, signal points on a constellation do not always need to be equidistant. The constellation may be a non-uniform constellation (NUC). The reception processing unit 212 performs decoding processing on encoded bits of the demodulated uplink channels. Decoded uplink data and uplink control information are output to the control unit 23.

The antenna 213 is an antenna device (an antenna unit) that mutually converts an electric current and a radio wave. The antenna 213 may be configured by one antenna element (for example, one patch antenna) or may be configured by a plurality of antenna elements (for example, a plurality of patch antennas). When the antenna 213 is configured by the plurality of antenna elements, the wireless communication unit 21 may be configured to be capable of performing beamforming. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting radio signals. Then, the wireless communication unit 21 may control the directivity of the radio signal transmitted using the vertically polarized waves and the horizontally polarized waves.

The storage unit 22 is a data readable/writable storage device such as a DRAM, an SRAM, a flash memory, or a hard disk. The storage unit 22 functions as storage means of the base station 20.

The control unit 23 is a controller that controls the units of the base station 20. The control unit 23 is realized by a processor such as a CPU (Central Processing Unit) or an MPU (Micro Processing Unit). For example, the control unit 23 is implemented by the processor executing various programs stored in a storage device inside the base station 20 using a RAM (Random Access Memory) or the like as a work area. Note that the control unit 23 may be realized by an integrated circuit such as an ASIC (Application Specific Integrated Circuit) or an FPGA (Field Programmable Gate Array). All of the CPU, the MPU, the ASIC, and the FPGA can be regarded as a controller. The control unit 23 may be realized by a GPU (Graphics Processing Unit) in addition to or instead of the CPU.

The control unit 23 includes an acquisition unit 231, a setting unit 232, a notification unit 233, a determination unit 234, and a communication control unit 235. The notification unit can be replaced with a transmission unit. Blocks (the acquisition unit 231 to the communication control unit 235) configuring the control unit 23 are functional blocks respectively indicating functions of the control unit 23. These functional blocks may be software blocks or may be hardware blocks. For example, each of the functional blocks explained above may be one software module realized by software (including a microprogram) or may be one circuit block on a semiconductor chip (die). Naturally, each of the functional blocks may be one processor or one integrated circuit. The control unit 23 may be configured in functional units different from the functional blocks. A configuration method for the functional blocks is optional.

The arithmetic unit 24 processes an arithmetic operation necessary for the transmission processing unit 211 and the reception processing unit 212 according to an instruction of the control unit 23. The arithmetic unit 24 is implemented by a processor such as a CPU, an MPU, or a GPU. The arithmetic unit 24 may be a processor separate from the control unit 23 or may be a processor integral with the control unit 23. The arithmetic unit 24 includes a setting unit 241, a processing unit 242, and an extraction unit 243. The arithmetic unit 24 is explained in detail below.

In several embodiments, the concept of the base station may consist of a set of a plurality of physical or logical devices. For example, in this embodiment, the base station may be distinguished into a plurality of devices such as a BBU (Baseband Unit) and an RU (Radio Unit). Then, the base station may be interpreted as an aggregate of the plurality of devices. The base station may be one of the BBU and the RU or may be both of the BBU and the RU. The BBU and the RU may be connected by a predetermined interface (for example, eCPRI (enhanced Common Public Radio Interface)). Note that the RU may be replaced with RRU (Remote Radio Unit) or RD (Radio DoT). The RU may correspond to a gNB-DU (gNB Distributed Unit) explained below. Further, the BBU may correspond to a gNB-CU (gNB Central Unit) explained below. Further, the RU may be a device formed integrally with an antenna. An antenna (for example, an antenna formed integrally with the RU) included in the base station may adopt an Advanced Antenna System and support MIMO (for example, FD-MIMO) or beamforming. The antenna included in the base station may include, for example, sixty-four transmission antenna ports and sixty-four reception antenna ports.

The antenna mounted on the RU may be an antenna panel configured from one or more antenna elements. The RU may be loaded with one or more antenna panels. For example, the RU may be loaded with two types of antenna panels including a horizontally polarized antenna panel and a vertically polarized antenna panel or two antenna panels including a clockwise circularly polarized antenna panel and a counterclockwise circularly polarized antenna panel. The RU may form and control an independent beam for each of the antenna panels.

Note that a plurality of base stations may be connected to one another. The one or the plurality of base stations may be included in a radio access network (RAN). In this case, the base station is sometimes simply referred to as RAN, RAN node, AN (Access Network), or AN node. Note that the RAN in the LTE is sometimes referred to as E-UTRAN (Enhanced Universal Terrestrial RAN). The RAN in the NR is sometimes referred to as NG-RAN. The RAN in the W-CDMA (UMTS) is sometimes referred to as UTRAN.

Note that an LTE base station is sometimes referred to as eNodeB (Evolved Node B) or eNB. At this time, the E-UTRAN includes one or a plurality of eNodeBs (eNBs). An NR base station is sometimes referred to as gNodeB or gNB. At this time, the NG-RAN includes one or a plurality of gNBs. The E-UTRAN may include a gNB (en-gNB) connected to a core network (EPC) in an LTE communication system (EPS). Similarly, the NG-RAN may include an ng-eNB connected to a core network 5GC in a 5G communication system (5GS).

When the base station is an eNB, a gNB, or the like, the base station is sometimes referred to as 3GPP access (3GPP Access). When the base station is a wireless access point, the base station is sometimes referred to as non-3GPP access (Non-3GPP Access). Further, the base station may be an optical extension device called RRH (Remote Radio Head). When the base station is the gNB, the base station may be a combination of the gNB-CU and the gNB-DU explained above or may be one of the gNB-CU and the gNB-DU.

Here, the gNB-CU hosts, for communication with the UE, a plurality of upper layers (for example, RRC, SDAP, and PDCP) in an access stratum. On the other hand, the gNB-DU hosts a plurality of lower layers (for example, RLC, MAC, and PHY) in the access stratum. That is, among messages/information explained below, RRC signaling (semi-static notification) may be generated by the gNB-CU and, on the other hand, MAC CE and DCI (dynamic notification) may be generated by the gNB-DU. Alternatively, among RRC configurations (semi-static notifications), for example, a part of the configurations such as IE: cellGroupConfig may be generated by the gNB-DU and the remaining configurations may be generated by the gNB-CU. These configurations may be transmitted and received by an F1 interface explained below.

Note that the base station may be configured to be capable of communicating with other base stations. For example, when a plurality of base station devices are combinations of eNBs or eNBs and en-gNBs, the base stations may be connected by an X2 interface. Furthermore, when the plurality of base stations are the combinations of the gNBs or the gn-eNBs and gNBs, the devices may be connected by an Xn interface. When the plurality of base stations are combinations of gNB-CUs and gNB-DUs, the devices may be connected by the F1 interface explained above. A message/information (for example, RRC signaling, MAC control element (MAC CE), or DCI) explained below may be transmitted among a plurality of base stations, for example, via the X2 interface, the Xn interface, or the F1 interface.

Cells provided by the base station are sometimes referred to as serving cells. The concept of the serving cells includes a PCell (Primary Cell) and an SCell (Secondary Cell). When dual connectivity is set for a UE (for example, the terminal device 40), a PCell provided by an MN (Master Node) and zero or one or more SCells are sometimes referred to as Master Cell Group. Examples of dual connectivity include E-UTRA-E-UTRA Dual Connectivity, E-UTRA-NR Dual Connectivity (ENDC), E-UTRA-NR Dual Connectivity with 5GC, NR-E-UTRA Dual Connectivity (NEDC), and NR-NR Dual Connectivity.

The serving cells may include a PSCell (Primary Secondary Cell or Primary SCG Cell). When dual connectivity is set for the UE, a PSCell provided by an SN (Secondary Node) and zero or one or more SCells are sometimes referred to as SCG (Secondary Cell Group). Unless specially set (for example, PUCCH on SCell), a physical uplink control channel (PUCCH) is transmitted by the PCell and the PSCell but is not transmitted by the SCell. A radio link failure is detected by the PCell and the PSCell but is not detected (may not be detected) by the SCell. As explained above, since the PCell and the PSCell have a special role among the serving cells, the PCell and the PSCell are referred to as SpCell (Special Cell) as well.

One downlink component carrier and one uplink component carrier may be associated with one cell. In addition, a system bandwidth corresponding to one cell may be divided into a plurality of BWPs (Bandwidth Parts). In this case, one or a plurality of BWPs may be set for the UE and one BWP may be used for the UE as an active BWP. Radio resources (for example, a frequency band, numerology (subcarrier spacing), and a slot format (Slot configuration)) that can be used by the terminal device 40 may be different for each of the cells, each of the component carriers, or each of the BWPs.

### <2-4. Configuration of the relay station>

Subsequently, a configuration of the relay station 30 is explained.

The relay station 30 is a device serving as a relay station of the base station. The relay station 30 is a type of the base station. The relay station 30 is a type of an information processing device. The relay station can be replaced with relay base station. The relay station 30 may be a device called repeater.

The relay station 30 is capable of performing wireless communication such as NOMA communication with the terminal device 40. The relay station 30 relays communication between the base station 20 and the terminal device 40. Note that the relay station 30 may be configured to be capable of wirelessly communicating with the other relay stations 30 and the other base stations 20. The relay station 30 may be a ground station device or may be a non-ground station device. The relay station 30 configures a radio access network RAN in conjunction with the base station 20.

Note that the relay station in the present embodiment may be a fixed device, may be a movable device, or may be a floatable device. The size of the coverage of the relay station in the present embodiment is not limited to a specific size. For example, the cell covered by the relay station may be a macro cell, a micro cell, or a small cell.

The relay station in the present embodiment is not limited to the loaded device if the function of relay is satisfied. For example, the relay may be loaded on a terminal device such as a smartphone, may be loaded on an automobile, a train, or a human-powered vehicle, may be loaded on a balloon, an airplane, or a drone, or may be loaded on a home appliance such as a television, a game machine, an air conditioner, a refrigerator, or a lighting fixture.

Besides, the configuration of the relay station 30 may be similar to the configuration of the base station 20 explained above. For example, like the base station 20 explained above, the relay station 30 may be a device installed in a mobile body or may be the mobile body itself. As explained above, the mobile body may be a mobile terminal such as a smartphone or a cellular phone. The mobile body may be a mobile body that moves on land (on the ground in a narrow sense) or may be a mobile body that moves underground. Naturally, the mobile body may be a mobile body that moves on water or may be a mobile body that moves underwater. The mobile body may be a mobile body that moves inside the atmosphere or may be a mobile body that moves outside the atmosphere. The base station 20 may be a ground station device or a non-ground station device. At this time, the relay station 30 may be an aircraft station or a satellite station.

The size of the coverage of the relay station 30 may be a large size such as the size of a macro cell or a small size such as the size of a pico cell like the size of the coverage of the base station 20. Naturally, the size of the coverage of the relay station 30 may be an extremely small size such as the size of a femtocell. The relay station 30 may have a beamforming capability. In this case, for the relay station 30, a cell or a service area may be formed for each beam.

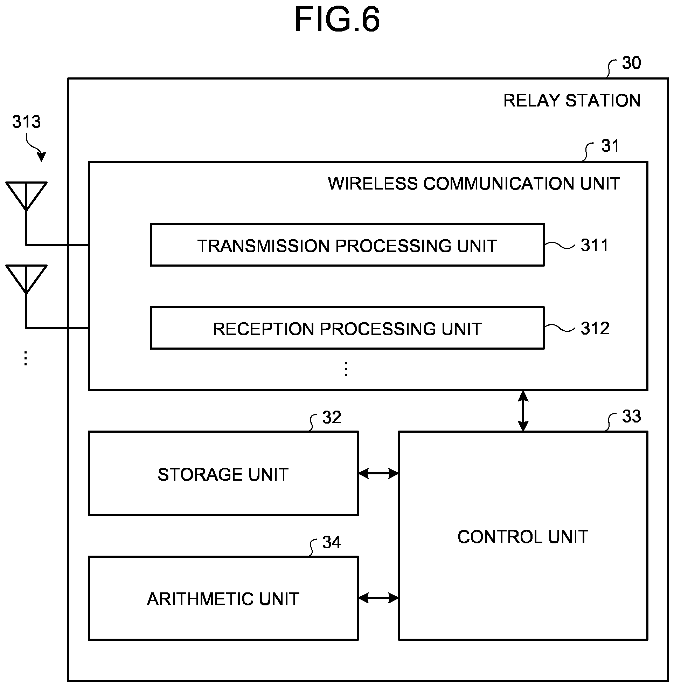

FIG. 6 is a diagram illustrating a configuration example of the relay station 30 according to the embodiment of the present disclosure. The relay station 30 includes a wireless communication unit 31, a storage unit 32, a control unit 33, and an arithmetic unit 34. Note that the configuration illustrated in FIG. 6 is a functional configuration. A hardware configuration may be different from this configuration. The functions of the relay station 30 may be implemented in a distributed manner in a plurality of physically separated components.

The wireless communication unit 31 is a wireless communication interface that wirelessly communicates with other wireless communication devices (for example, the base station 20, the terminal device 40, and other relay stations 30). The wireless communication unit 31 is adapted to one or a plurality of radio access schemes. For example, the wireless communication unit 31 is adapted to both of the NR and the LTE. The wireless communication unit 31 may be adapted to W-CDMA or cdma 3000 in addition to the NR and the LTE. The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. Note that, when the wireless communication unit 31 is adapted to a plurality of radio access schemes, the units of the wireless communication unit 31 can be configured individually for each of the radio access schemes. For example, the transmission processing unit 311 and the reception processing unit 312 may be individually configured by the LTE and the NR. The configurations of the transmission processing unit 311, the reception processing unit 312, and the antenna 313 are similar to the configurations of the transmission processing unit 211, the reception processing unit 212, and the antenna 213 explained above. Note that the wireless communication unit 31 may be configured to be capable of performing beamforming like the wireless communication unit 21.

The storage unit 32 is a data readable/writable storage device such as a DRAM, an SRAM, a flash memory, or a hard disk. The storage unit 32 functions as storage means of the relay station 30.

The control unit 33 is a controller that controls the units of the relay station 30. The control unit 33 is realized by a processor such as a CPU or an MPU. For example, the control unit 33 is realized by the processor executing various programs stored in a storage device inside the relay station 30 using a RAM or the like as a work area. Note that the control unit 33 may be realized by an integrated circuit such as an ASIC or an FPGA. All of the CPU, the MPU, the ASIC, and the FPGA can be regarded as a controller. The operation of the control unit 33 may be the same as the operation of the blocks (the acquisition unit 231 to the communication control unit 235) of the control unit 23 of the base station 20.

The arithmetic unit 34 processes an arithmetic operation necessary for the transmission processing unit 211 and the reception processing unit 212 according to an instruction from the control unit 33. The arithmetic unit 34 is realized by a processor such as a CPU, an MPU, or a GPU. The arithmetic unit 34 may be a processor separate from the control unit 33 or may be a processor integral with the control unit 33. The operation of the arithmetic unit 34 may be the same as the operation of the blocks (the setting unit 241 to the extraction unit 243) of the arithmetic unit 24 of the base station 20.

Note that the relay station 30 may be an IAB relay node. The relay station 30 operates as an IAB-MT (Mobile Termination) for an IAB donor node for providing backhaul and operates as an IAB-DU (Distributed Unit) for a terminal device 40 for providing access. The IAB donor node may be, for example, the base station 20 and operates as an IAB-CU (Central Unit).

### <2-5. Configuration of the terminal device>

Subsequently, a configuration of the terminal device 40 is explained.

The terminal device 40 is a wireless communication device that wirelessly communicates with other communication devices such as the base station 20 and the relay station 30. The terminal device 40 is, for example, a mobile phone, a smart device (a smartphone or a tablet), a PDA (Personal Digital Assistant), or a personal computer. The terminal device 40 may be equipment such as a camera for business use including a communication function or may be a motorcycle, a mobile relay vehicle, or the like on which communication equipment such as an FPU (Field Pickup Unit) is loaded. The terminal device 40 may be an M2M (Machine to Machine) device or an IoT (Internet of Things) device.

Note that the terminal device 40 may be capable of performing NOMA communication with the base station 20. The terminal device 40 may be capable of using an automatic retransmission technology such as HARQ when communicating with the base station 20. The terminal device 40 may be capable of performing side-link communication with another terminal device 40. The terminal device 40 may also be capable of using the automatic retransmission technology such as HARQ when performing side-link communication. Note that the terminal device 40 may also be capable of performing NOMA communication in communication (side-link) with the other terminal devices 40. The terminal device 40 may be capable of performing LPWA communication with other communication devices (for example, the base station 20 and the other terminal devices 40). The wireless communication used by the terminal device 40 may be wireless communication using millimeter waves. Note that the wireless communication (side-link communication) used by the terminal device 40 may be wireless communication using radio waves or wireless communication (optical wireless) using infrared rays or visible light.

The terminal device 40 may be a mobile device. The mobile device is a movable wireless communication device. At this time, the terminal device 40 may be a wireless communication device installed in a mobile body or may be the mobile body itself. For example, the terminal device 40 may be a vehicle that moves on a road such as an automobile, a bus, a truck, or a motorcycle, a vehicle that moves on a rail installed on a track such as a train, or a wireless communication device loaded on the vehicle. Note that the mobile body may be a mobile terminal or may be a mobile body that moves on the land (the ground in a narrow sense), underground, on water, underwater. The mobile body may be a mobile body that moves inside the atmosphere such as a drone or a helicopter or may be a mobile body that moves outside the atmosphere such as an artificial satellite.

The terminal device 40 may be simultaneously connected to a plurality of base stations or a plurality of cells to implement communication. For example, when one base station supports a communication area via a plurality of cells (for example, pCells and sCells), the plurality of cells can be bundled to perform communication between the base station 20 and the terminal device 40 by a carrier aggregation (CA) technology, a dual connectivity (DC) technology, or a multi-connectivity (MC) technology. Alternatively, the terminal device 40 and the plurality of base stations 20 can communicate via cells of different base stations 20 with a coordinated multi-point transmission and reception (CoMP) technology.

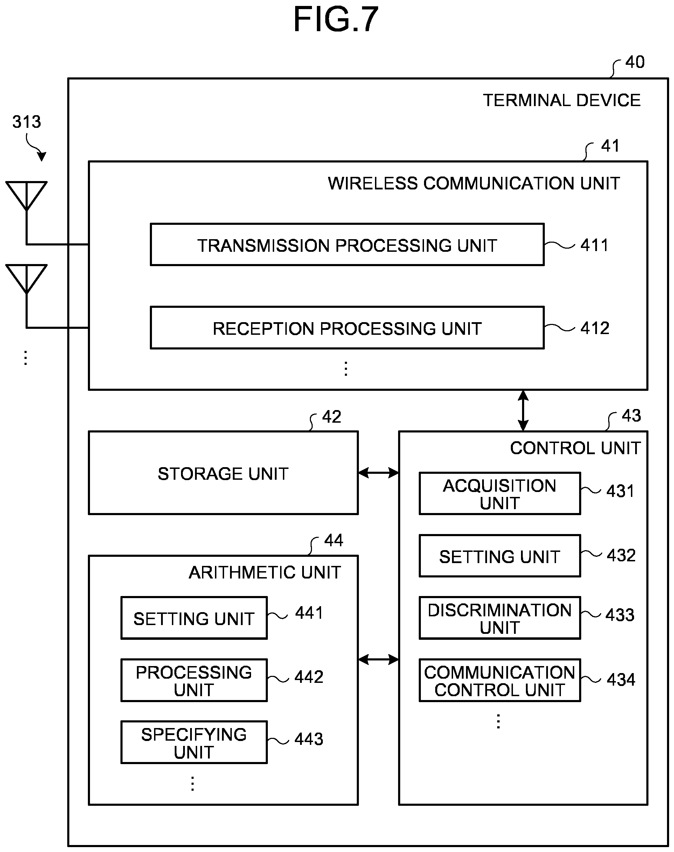

FIG. 7 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 7 is a functional configuration and a hardware configuration may be different from the functional configuration. The functions of the terminal device 40 may be implemented in a distributed manner in a plurality of physically separated components.

The wireless communication unit 41 is a signal processing unit for wirelessly communicating with other wireless communication devices (for example, the base station 20, the relay station 30, and the other terminal devices 40). The wireless communication unit 41 operates according to control of the control unit 43. The wireless communication unit 41 includes a transmission processing unit 411, a reception processing unit 412, and an antenna 413. The configurations of the wireless communication unit 41, the transmission processing unit 411, the reception processing unit 412, and the antenna 413 may be the same as those of the wireless communication unit 21, the transmission processing unit 211, the reception processing unit 212, and the antenna 213 of the base station 20. The wireless communication unit 41 may be configured to be capable of performing beamforming like the wireless communication unit 21.

The storage unit 42 is a data readable/writable storage device such as a DRAM, an SRAM, a flash memory, or a hard disk. The storage unit 42 functions as storage means of the terminal device 40.

The control unit 43 is a controller that controls the units of the terminal device 40. The control unit 43 is realized by a processor such as a CPU or an MPU. For example, the control unit 43 is realized by the processor executing various programs stored in a storage device inside the terminal device 40 using a RAM or the like as a work area. Note that the control unit 43 may be realized by an integrated circuit such as an ASIC or an FPGA. All of the CPU, the MPU, the ASIC, and the FPGA can be regarded as a controller. The control unit 43 may be realized by a GPU in addition to or instead of the CPU.

The control unit 43 includes an acquisition unit 431, a setting unit 432, a discrimination unit 433, and a communication control unit 434. Blocks (the acquisition unit 431 to the communication control unit 434) configuring the control unit 43 are respectively functional blocks indicating functions of the control unit 43. These functional blocks may be software blocks or may be hardware blocks. For example, each of the functional blocks explained above may be one software module realized by software (including a microprogram) or may be one circuit block on a semiconductor chip (die). Naturally, each of the functional blocks may be one processor or one integrated circuit. Note that the control unit 43 may be configured in functional units different from the functional blocks explained above. A configuration method for the functional blocks is optional.

The arithmetic unit 44 processes an arithmetic operation necessary for the transmission processing unit 411 and the reception processing unit 412 according to an instruction of the control unit 43. The arithmetic unit 44 is realized by a processor such as a CPU, an MPU, or a GPU. The arithmetic unit 44 may be a processor separate from the control unit 43 or may be a processor integrated with the control unit 43. The arithmetic unit 44 includes a setting unit 441 and a processing unit 442. The arithmetic unit 44 is explained in detail below.

### <<3. Configuration of the arithmetic unit>>

The configuration of the communication system 1 is explained above. Subsequently, a configuration of the arithmetic unit applicable in the communication system 1 in the present embodiment is explained. Note that the arithmetic unit 34 of the relay station 30 may have the same configuration as the arithmetic unit 24 of the base station 20 or may have the same configuration as the arithmetic unit 44 of the terminal device 40.

### <3-1. Configuration example of the arithmetic unit of the base station>

First, the arithmetic unit 24 of the base station 20 is explained.

The arithmetic unit 24 processes an arithmetic operation necessary for the transmission processing unit 211 and the reception processing unit 212 according to an instruction of the control unit 23. The arithmetic unit 24 in the present embodiment generates information (for example, signal processing parameters such as a modulation scheme, an encoding method, and the number of layers) necessary for the transmission processing unit 211 and the reception processing unit 212 using a learning model. In the following explanation, the learning model is sometimes referred to as arithmetic model.

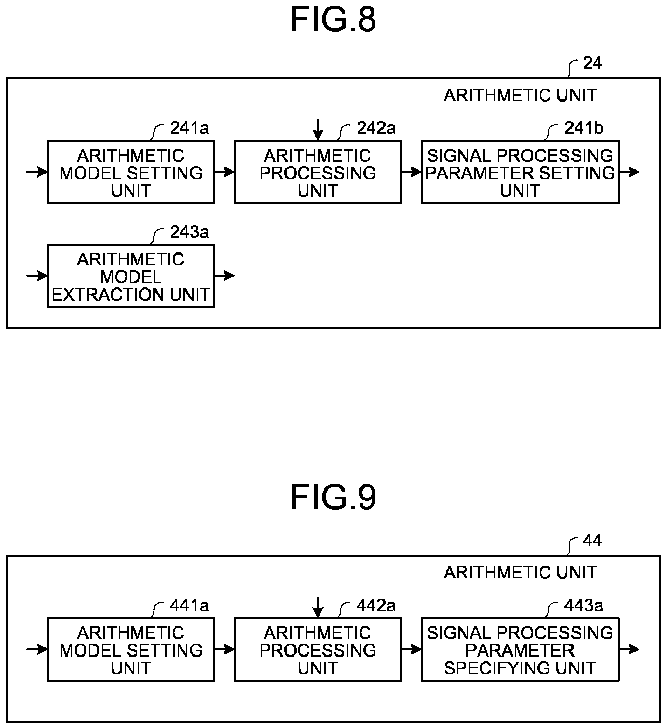

FIG. 8 is a configuration example of the arithmetic unit 24 of the base station 20. The arithmetic unit 24 includes an arithmetic model setting unit 241a, an arithmetic processing unit 242a, a signal processing parameter setting unit 241b, and an arithmetic model extraction unit 243a. The arithmetic model setting unit 241a and the signal processing parameter setting unit 241b are equivalent to the setting unit 241 illustrated in FIG. 5. The arithmetic processing unit 242a is equivalent to the processing unit 242 illustrated in FIG. 5. The arithmetic model extraction unit 243a is equivalent to the extraction unit 243 illustrated in FIG. 5.

The arithmetic model setting unit 241a sets, for example, a configuration of a neural network model based on the parameters stored in the storage unit 22. The neural network model is configured from layers called input layer, hidden layer (or intermediate layer), and an output layer including a plurality of nodes. The nodes are connected via edges. The layers have a function called an activation function and the edges are weighted. A neural network model based on deep learning is configured from a plurality of hidden layers. Accordingly, the setting the configuration of the neural network model means setting the numbers of layers of the hidden layer (or the intermediate layer) added to the input layer and the output layer, the numbers of nodes of the layers, and the weights of the edges. The transmission processing unit 211 notifies the terminal device 40 of parameters for setting the configuration of the neural network model using system information or dedicated signalling.

The neural network model is, for example, a model in a form called CNN (Convolution Neural Network), RNN (Recurrent Neural Network), or LSTM (Long Short-Term Memory). Naturally, the neural network model is not limited to these models.

In the CNN, the hidden layer is configured from layers called convolution layer and pooling layer. In the convolution layer, filtering is performed by a convolution operation and data called a feature map is extracted. In the pooling layer, information concerning the feature map output from the convolution layer is compressed and down-sampling is applied to the information. The CNN receives input of, for example, information concerning radio resources of the radio resources arranged over a frequency axis and a time axis, for example, reception strength of a reference signal and can obtain a characteristic of a radio resource configured as an output layer by radio resources, for example, information concerning a propagation channel. Here, a unit of the radio resources is, for example, a subcarrier, a resource element, a resource block, or the like.

The RNN has a network structure in which a value of the hidden layer is recursively input to the hidden layer. For example, short-period time-series data is processed in the RNN.

In the LSTM, the influence of output far in the past can be retained by introducing a parameter for retaining a state of an intermediate layer called memory cell into an intermediate layer output of the RNN. That is, the LSTM processes time-series data of a longer period compared with the RNN.

The arithmetic model includes one or more CNNs, RNNs, and/or LSTMs and is dependent on or processed in parallel.

The arithmetic processing unit 242a acquires the information concerning the reception strength of the uplink reference signal acquired by the reception processing unit 212 via the control unit 23. The information concerning the reception strength of the uplink reference signal is information reflecting a state of the propagation channel between the base station 20 and the terminal device 40.

Furthermore, the base station 20 may acquire information reflecting the state of the propagation channel between the base station 20 and the terminal device 40 from the terminal device 40. The information reflecting the state of the propagation channel is acquired using, for example, dedicated signalling.

Note that whether the information concerning the reception strength of the uplink reference signal or the information reflecting the state of the propagation channel acquired from the terminal device 40 using the dedicated signaling is used as the information reflecting the state of the propagation channel between the base station 20 and the terminal device 40 may be determined based on a duplex scheme applied by the wireless communication unit 21. For example, in the case of TDD Time Division Duplex), the information concerning the reception strength of the uplink reference signal is used considering reciprocity between uplink and downlink propagation channels. In the case of FDD (Frequency Division Duplex), the information reflecting the state of the downlink propagation channel acquired from the terminal device 40 using dedicated signaling is used.

The arithmetic processing unit 242a acquires downlink data, that is, information concerning resource allocation for transmitting PDSCH (Physical Downlink Shared Channel) from the control unit 23 to the terminal device 40. The information (for example, the information concerning the reception strength of the uplink reference signal) reflecting the state of the propagation channel and the information concerning the resource allocation for transmitting the downlink data are input to nodes of the input layer of the neural network model set by the arithmetic model setting unit 241a. Here, the uplink reference signal is, for example, a DMRS (DeModulation Reference Signal), an SRS (Sounding Reference Signal), or another reference signal with which a characteristic of the propagation channel can be estimated.

After necessary information to the input layer of the neural network model set by the arithmetic model setting unit 241a is input to the arithmetic processing unit 242a, an arithmetic operation is performed. A result of the arithmetic operation is reflected on values of the nodes of the output layer of the neural network model.

The modulation parameter setting unit 241b acquires the values of the nodes of the output layer of the neural network model explained above and sets resources allocated to transmit downlink data, that is, the MCS (that is, the order (Qm) of the modulation scheme, the code rate (R)), and the number of layers (v) applied to resource elements.

The information concerning the order, the code rate, and the number of layers of the modulation scheme applied to the resource elements set by the modulation parameter setting unit 241b is provided to the transmission processing unit 211 via the control unit 23 and used for the modulation processing and the encoding processing of the downlink data.

The arithmetic model extraction unit 243a determines parameters related to the configuration of the arithmetic model, for example, the neural network model with a method such as machine learning, deep learning, or reinforcement learning.

The arithmetic model extraction unit 243a acquires frequency use efficiency (Spectral Efficiency) calculated based on the information concerning the order, the code rate, and the number of layers of the modulation scheme applied to the resource elements, and characteristics of the resource elements in the propagation channel, for example, S/N. Further, the arithmetic model extraction unit 243a acquires information concerning retransmission in units of a TB (Transport Block) or a CBG (Code Block Group) including the resource elements or any retransmission data. Here, the information concerning retransmission is, for example, presence or absence of occurrence of retransmission and forwarding of retransmission. The arithmetic model extraction unit 243a acquires information concerning an overhead of downlink control information used for notifying information concerning resources allocated to send the downlink data. Here, the information concerning the overhead of the downlink control information is the number of times of transmission of signaling and the sizes of the kinds of downlink control information.

The arithmetic model extraction unit 243a executes the machine learning, the deep learning, or the reinforcement learning on the information concerning the frequency use efficiency for the resource element, the S/N in the propagation channel, the retransmission and the information concerning the overhead of the downlink control information and extracts a neural network model, which is an arithmetic model. In the reinforcement learning, an action (setting) for maximizing a value is learned through trial and error. For example, the reinforcement learning is performed with use of a modulation scheme of a higher order, use of a higher coding rate, use of a larger number of layers, reduction in the number of times of retransmission, and the like as rewards. As a result of the learning, for example, a neural network model having highest frequency use efficiency as a value is extracted. In the machine learning or the deep learning, a neural network model is extracted as a result of learning using a data set for learning. Here, the data set for learning is, for example, a set of data configured from an operating frequency, which is input information, reception strength and the like of a reference signal, and output information, that is, signal processing parameters such as a modulation scheme, an encoding method, and the number of layers to be setting targets for the input information. The parameters relating to the configuration of the neural network model extracted by the arithmetic model extraction unit 243a are stored in the storage unit 22 according to an instruction of the control unit 23.

### <3-2. Configuration example of the arithmetic unit of the terminal device>

First, the arithmetic unit 44 of the terminal device 40 is explained.

The arithmetic unit 44 processes an arithmetic operation necessary for the transmission processing unit 411 and the reception processing unit 412 according to an instruction of the control unit 43. The arithmetic unit 44 of the present embodiment generates information (for example, signal processing parameters such as a modulation scheme, an encoding method, and the number of layers) necessary for the transmission processing unit 411 and the reception processing unit 412 using the learning model.

FIG. 9 is a configuration example of the arithmetic unit 44 of the terminal device 40. The arithmetic unit 44 includes an arithmetic model setting unit 441a, an arithmetic processing unit 442a, and a signal processing parameter specifying unit 443a. The arithmetic model setting unit 441a is equivalent to the setting unit 441 illustrated in FIG. 7. The arithmetic processing unit 442a is equivalent to the processing unit 442 illustrated in FIG. 7. The signal processing parameter specifying unit 443a is equivalent to the specifying unit 443 illustrated in FIG. 7.

The arithmetic model setting unit 441a sets, for example, a configuration of a neural network model serving as an arithmetic model based on the parameters stored in the storage unit 42. The neural network model is configured from layers called input layer, hidden layer (or intermediate layer), and an output layer including a plurality of nodes. The nodes are connected via edges. The layers have a function called an activation function and the edges are weighted. A neural network model based on deep learning is configured from a plurality of hidden layers. Accordingly, the setting the configuration of the neural network model means setting the numbers of layers of the hidden layer (or the intermediate layer) added to the input layer and the output layer, the numbers of nodes of the layers, and the weights of the edges.

The neural network model is, for example, a model in a form called CNN, RNN, or LSTM. The arithmetic model includes one or more CNNs, RNNs, and/or LSTMs and is dependent on or processed in parallel.

The arithmetic processing unit 442a acquires the information concerning the reception strength of the downlink reference signal acquired by the reception processing unit 412 via the control unit 43. The information concerning the reception strength of the downlink reference signal is information reflecting a state of the propagation channel between the base station 20 and the terminal device 40. Here, the downlink reference signal is, for example, a DMRS (DeModulation Reference Signal), a CSI-RS (Channel State Information Reference Signal), an SS (Synchronization Signal) or another reference signal with which a characteristic of the propagation channel can be estimated. Further, the arithmetic processing unit 442a acquires, via the control unit 43, information concerning resource allocation for receiving a PDSCH included in DCI (Downlink Control Information) of the PDCCH acquired by the reception processing unit 412. The information concerning the reception strength of the downlink reference signal and the information concerning the resource allocation for receiving the PDSCH are input to the nodes of the input layer of the neural network model set by the arithmetic model setting unit 441a.

The arithmetic processing unit 442a inputs necessary information to the input layer of the neural network model set by the arithmetic model setting unit 441a and thereafter performs an arithmetic operation. A result of the arithmetic operation is reflected on values of the nodes of the output layer of the neural network model.

The signal processing parameter specifying unit 443a acquires the values of the nodes of the output layer of the neural network model explained above and specifies resources allocated to receive PDSCH, that is, an MCS applied to the resource elements, that is, the order (Qm), the code rate (R), and the number of layers (v) of the modulation scheme. The information concerning the order, the code rate, and the number of layers of the modulation scheme applied to the resource elements specified by the signal processing parameter specifying unit 443a is provided to the reception processing unit 412 via the control unit 43 and is used for demultiplexing processing, demodulation processing, and decoding processing for the PDSCH.

### <<4. Processing of the present embodiments

The configuration of the arithmetic unit is explained above. Subsequently, signal processing in the present embodiment is explained.

### <4-1. Overview of processing>

First, an overview of processing of the present embodiment is explained.

In the present embodiment, a signal processing method is enabled to be changed in any units according to reception quality that changes in frequency resources. For example, the base station 20 sets a resource unit (a first resource) relating to application of predetermined signal processing including at least one signal processing among modulation processing, encoding processing, and multiplexing processing. Then, the base station 20 notifies the terminal device 40 of information concerning a second resource configured by a plurality of resource units (a plurality of first resources). For example, the information concerning the second resource is information concerning resource units configuring the second resource. The base station 20 determines signal processing parameter for each of the resource units (for each of the first resources) and executes predetermined signal processing based on the determined signal processing parameters. The terminal device 40 discriminates the signal processing parameters for each of the resource units (for each of the first resources) determined by the base station 20. The terminal device 40 executes signal processing based on the discriminated signal processing parameters.

The signal processing parameters may include information concerning at least one of a modulation scheme, an encoding method, and the number of layers. Here, the modulation scheme corresponds to, for example, the order (Qm) illustrated in FIG. 1, the encoding method corresponds to, for example, the code rate (R) illustrated in FIG. 1, and the number of layers corresponds to the number of layers (v), which is the number of streams simultaneously transmitted and received by applying MIMO.

In the following explanation, TB (Transport Block) may be replaced with Codeword.

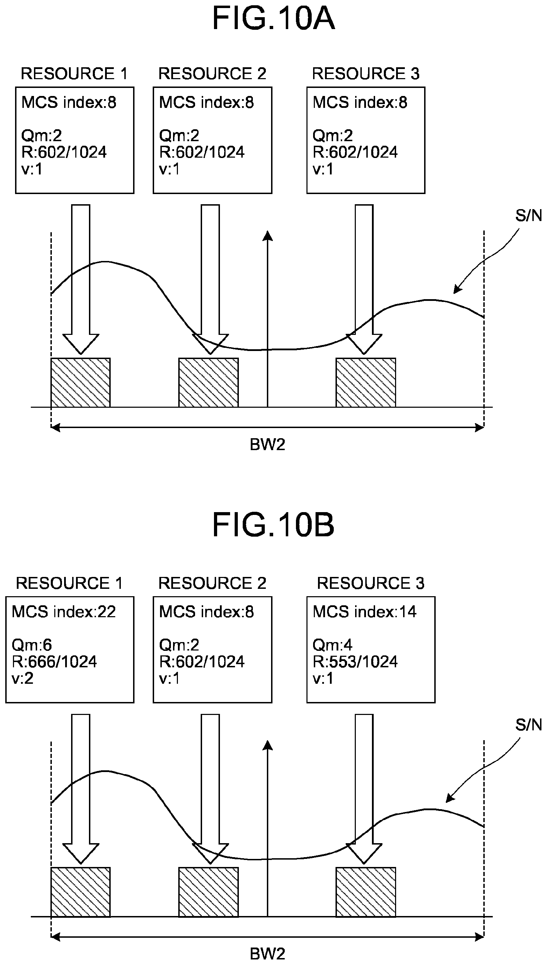

In the related art, the MCS is applied in TB (Transport Block) units. However, in the present embodiment, the signal processing parameters are enabled to be set in units smaller than TBs. FIG. 10A and FIG. 10B are examples of setting of the order, the code rate, and the number of layers of the modulation scheme. Here, resources are allocated to a certain UE in order to transmit one transport block of downlink data. More specifically, three resources are allocated to a certain UE. The resources are configured by continuous resource elements. Alternatively, the resources may be configured by noncontinuous resource elements.

FIG. 10A is an example in which the base station 20 sets the order, the code rate, and the number of layers of the same modulation scheme for three resources. The order, the code rate, and the number of layers of the modulation scheme are set based on a state of a propagation channel. In the example illustrated in FIG. 10A, the base station 20 sets the order, the code rate, and the number of layer of the modulation schemes based on a propagation channel of a resource 2 having the lowest reception S/N. For example, if an MCS index is 8, the order of the modulation scheme is 2, the code rate is 602/1024, and the number of layers is 1. In the example illustrated in FIG. 10A, the base station 20 applies the same setting as that of the resource 2 to a resource 1 and a resource 3.

FIG. 10B is a method in the present embodiment. In an example illustrated in FIG. 10B, the base station 20 sets the order, the code rate, and the number of layers of the modulation scheme for each of resources based on a state of a propagation channel for each of the resources. For example, the base station 20 sets an MCS index 22 and the number of layers (v) 2 for the resource 1 based on a reception S/N of a propagation channel of the resource 1. In this case, the order of the modulation scheme is 6, the code rate is 666/1024, and the number of layers is 2. The base station 20 sets an MCS index 8 and the number of layers (v) 1 for the resource 2 based on a reception S/N of a propagation channel of the resource 2. In this case, the order of the modulation scheme is 2, the code rate is 602/1024, and the number of layers is 1. The base station 20 sets, for example, an MCS index 14 and the number of layers (v) 1 for the resource 3 based on a reception S/N of a propagation channel of the resource 3. In this case, the order of the modulation scheme is 4, the code rate is 553/1024, and the number of layers is 1.

In the case of FIG. 10B, frequency use efficiency of the resource 2 is the same as that in the example illustrated in FIG. 10A. However, frequency use efficiency of the resource 1 and the resource 3 is improved compared with the case of FIG. 10A. That is, if the technique in the present embodiment is used, the base station 20 can transmit a transport block of a larger size by using the same resource.

### <4-2. First Embodiment>

The overview of the processing in the present embodiment are explained above. Subsequently, an operation of the communication system 1 according to a first embodiment is explained.

### <5-2-1. Operation of the base station>

First, an operation of the base station 20 according to the first embodiment is explained.

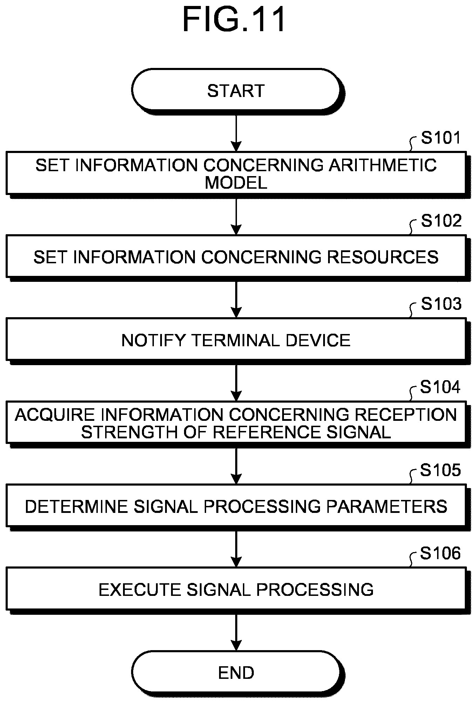

FIG. 11 is a flowchart illustrating an example of transmission processing of the base station 20 according to the first embodiment. The base station 20 sets resource units relating to application of predetermined signal processing (modulation processing, encoding processing, and multiplexing processing). Then, the base station 20 notifies the terminal device 40 of information concerning the resource units. The base station 20 determines signal processing parameters for each of the set resource units. The base station 20 executes predetermined signal processing on transmission data based on the determined signal processing parameters (a modulation scheme, an encoding method, and the number of layers).

The operation of the base station 20 is explained below with reference to the flowchart of FIG. 11. Processing explained below is executed by, for example, the control unit 23 and the arithmetic unit 24 of the base station 20.

First, the setting unit 232 of the control unit 23 sets a configuration of an arithmetic model and information concerning coefficients of the arithmetic model (step S101). These kinds of information may be, for example, information extracted by the extraction unit 243 and stored in the storage unit 22.

Subsequently, the setting unit 232 sets information concerning resources for downlink data transmission (step S102). For example, this information is notified from the base station 20 to the terminal device 40 via downlink control information.

Note that, in step S102, the setting unit 232 may set information concerning a resource unit relating to application of predetermined signal processing. The resource unit is, for example, a component carrier, a BWP (Band Width Part), a non-orthogonal resource, a resource block, a resource element, or a subcarrier. The resource unit may be a resource unit determined based on an arithmetic operation result of the arithmetic unit 44.

The notification unit 233 of the control unit 23 notifies the terminal device 40 of the information concerning the resource unit (step S103). At this time, the base station 20 may notify the information concerning the resource unit using system information or dedicated signaling. That is, the base station 20 can set the same resource unit for all the terminal devices 40 in the cell or can set an individual resource unit for each of the terminal devices 40. Note that the base station 20 may dynamically change the resource unit. The base station 20 may set the resource unit according to an operating frequency. Here, the operating frequency may be, for example, frequency band classification such as NR-ARFCN (NR-Absolute Radio Frequency Channel Number), band number, FR1, or FR2 or BWP-ID. Further, the base station 20 may set the resource unit according to a type of an operating frequency, for example, classification of a licensed frequency (a license frequency), a shared frequency, or an unlicensed frequency (an un-license frequency).

Subsequently, the acquisition unit 231 of the control unit 23 receives an uplink reference signal from the terminal device 40 via the wireless communication unit 21. Then, the acquisition unit 231 acquires information concerning reception strength of the uplink reference signal based on the received uplink reference signal (step S104) .

Then, the determination unit 234 of the control unit 23 determines signal processing parameters (a modulation scheme, an encoding method, and the number of layers) applied to resource units (step S105). The determination unit 234 may determine signal processing parameters for each of the resource units based on an arithmetic operation result of the arithmetic unit 24.

For example, the setting unit 241 of the arithmetic unit 24 sets an arithmetic model based on the information set in step S101. Then, the processing unit 242 of the arithmetic unit 24 inputs, to the arithmetic model set by the setting unit 241, information concerning the resources set in step S102 and information concerning the reception strength of the uplink reference signal acquired in step S104. An output from this arithmetic model is signal processing parameters (a modulation scheme, an encoding method, and the number of layers) for each of the resource units.

The communication control unit 235 of the control unit 23 executes predetermined signal processing (modulation processing, encoding processing, and multiplexing processing) for each of the resource units based on the signal processing parameters determined in step S105 (step S106).

Note that, in step S102, the setting unit 232 sets resource units based on, for example, information concerning QoS of downlink data. Alternatively, the base station 20 sets the resource units based on a network slice to which the downlink data corresponds.

The network slice can be identified by S-NSSAI (Single-Network Slice Selection Assistance Information). The S-NSSAI is configured by a set of mandatory SSTs (Slice/Service Type) formed by 8 bits for identifying a type of slice type (slice type) and optional SD (Slice Differentiator) formed by 24 bits for distinguishing different slices in the same SST. Here, 1: eMBB, 2: URLLC, 3: MIoT, and 4: V2X are respectively defined as standardized values of the SST.

In step S102, the setting unit 232 may set the resource units based on a type of an application that has started the downlink data transmission. The type of the application is discriminated based on, for example, an application name or identification information defined in advance to identify the application.

### <5-2-2. Operation of the terminal device>

Subsequently, an operation of the terminal device 40 according to the first embodiment is explained.

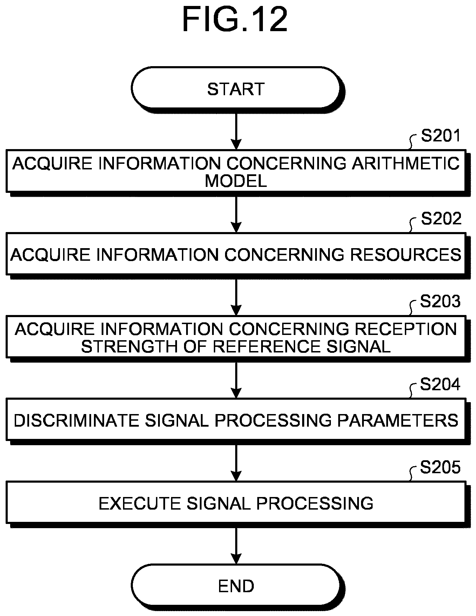

FIG. 12 is a flowchart illustrating an example of reception processing of the terminal device 40 according to the first embodiment. The terminal device 40 acquires, from the base station 20, information concerning resource units relating to application of predetermined signal processing (demultiplexing processing, demodulation processing, and decoding processing). The terminal device 40 discriminates, for each of resource units notified from the base station 20, signal processing parameter (a modulation scheme, an encoding method, and the number of layers) applied to transmission data by the base station 20. Then, the terminal device 40 executes signal processing on reception data based on the discriminated signal processing parameters.

The operation of the terminal device 40 is explained below with reference to a flowchart of FIG. 12. The following processing is executed by, for example, the control unit 43 and the arithmetic unit 44 of the terminal device 40.

First, the acquisition unit 431 of the control unit 43 acquires a configuration of an arithmetic model and information concerning coefficients of the arithmetic model (step S201). These kinds of information are notified, for example, from the base station 20 by system information or dedicated signaling.

Next, the acquisition unit 431 acquires information concerning a resource allocated to receive downlink data (step S202). For example, this information is notified from the base station 20 via downlink control information.

Note that the acquisition unit 431 may acquire information concerning a resource unit relating to application of predetermined signal processing in step S202. The resource unit is, for example, a component carrier, a BWP (Band Width Part), a non-orthogonal resource, a resource block, a resource element, or a subcarrier. Here, the information concerning the resource unit may be dynamically notified information or semi-statically notified information. For example, the information concerning the resource unit may be notified by system information or dedicated signaling. The terminal device 40 may acquire the information concerning the resource unit when accessing to the base station 20 at random.

Subsequently, the acquisition unit 431 receives a downlink reference signal from the base station 20 via the wireless communication unit 41. Then, the acquisition unit 431 acquires information concerning reception strength of the downlink reference signal based on the received downlink reference signal (step S203).

Then, the discrimination unit 433 of the control unit 43 discriminates signal processing parameters (a modulation scheme, an encoding method, and the number of layers) applied to each of resource units by the base station 20 (step S204). Here, the discrimination unit 433 may discriminate the signal processing parameters for each of resource units based on an arithmetic operation result of the arithmetic unit 44.

For example, the setting unit 441 of the arithmetic unit 44 sets an arithmetic model based on the information acquired in step S201. Then, the processing unit 442 of the arithmetic unit 44 inputs, to the arithmetic model set by the setting unit 441, the information concerning the resource acquired in step S202 and the information concerning the reception strength of the downlink reference signal acquired in step S203. An output from the arithmetic model is the signal processing parameters (the modulation scheme, the encoding method, and the number of layers) applied to each of the resource units by the base station 20.

The communication control unit 434 of the control unit 43 executes predetermined signal processing (demultiplexing processing, demodulation processing, and decoding processing) for each of the resource units based on the signal processing parameters discriminated in step S204 (step S205).

According to the present embodiment, even when the terminal device 40 operates in a wider frequency band and the base station 20 allocates more radio resources for downlink data transmission, the terminal device 40 and the base station 20 can execute optimum encoding processing, modulation processing, and multiplexing processing for each of the resource units. Consequently, the frequency use efficiency is improved.

The terminal device 40 discriminates, using the arithmetic model, the signal processing parameters (the modulation scheme, the encoding method, and the number of layers) for each the resource units set by the base station 20. Therefore, the base station 20 does not have to transmit the information concerning the signal processing parameters for each of the resource units using the downlink control information. As a result, dedicated signaling overheads are reduced.

### <4-3. Second Embodiment>

Subsequently, a second embodiment is explained.

In the first embodiment, the base station 20 on the data transmission side determines the signal processing parameters based on the reception strength of the uplink reference signal and the terminal device 40 on the data reception side determines the signal processing parameters based on the reception strength of the downlink reference signal. Therefore, when the reception strength of the uplink reference signal and the reception strength of the downlink reference signal are greatly different, it can be assumed that the signal processing parameters discriminated by the terminal device 40 are different from the signal processing parameters determined by the base station 20. Therefore, in the second embodiment, the terminal device 40 acquires signal processing parameters concerning one resource unit among a plurality of resource units from the base station 20 in advance. The terminal device 40 improves discrimination accuracy of signal processing parameters by using, for discrimination, the signal processing parameters acquired in advance.

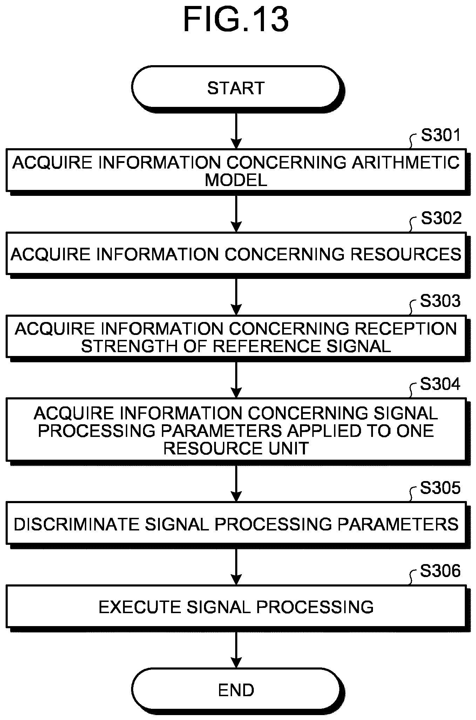

FIG. 13 is a flowchart illustrating an example of reception processing of the terminal device 40 according to the second embodiment. Note that an operation of the base station 20 is the same as the operation in the first embodiment except that the signal processing parameters concerning one resource unit are transmitted to the terminal device 40. Therefore, explanation of the operation is omitted. An operation of the terminal device 40 is explained below with reference to the flowchart of FIG. 13. The following processing is executed by, for example, the control unit 43 and the arithmetic unit 44 of the terminal device 40.

First, the acquisition unit 431 of the control unit 43 acquires a configuration of an arithmetic model and information concerning coefficients of the arithmetic model (step S301). Then, the acquisition unit 431 acquires information concerning resources allocated for reception of downlink data (step S302). In step S302, the acquisition unit 431 may acquire information concerning resource units relating to application of predetermined signal processing. Here, the predetermined signal processing includes at least one of demultiplexing processing, demodulation processing, and decoding processing.

Thereafter, the acquisition unit 431 receives a downlink reference signal from the base station 20 via the wireless communication unit 41. Then, the acquisition unit 431 acquires information concerning the reception strength of the downlink reference signal based on the received downlink reference signal (step S303).

Further, the acquisition unit 431 acquires information concerning signal processing parameters applied to one resource unit among a plurality of resource units (step S304). The acquisition unit 431 may obtain this information via downlink control information. Note that the "plurality of resource units" are, for example, a plurality of resource units configuring resources allocated for reception of downlink data. The "resource unit" is, for example, a component carrier, a BWP (Band Width Part), a non-orthogonal resource, a resource block, a resource element, or a subcarrier. As explained above, the information concerning the signal processing parameters includes information concerning at least one of the modulation scheme, the encoding method, and the number of layers.

Then, the discrimination unit 433 of the control unit 43 discriminates signal processing parameters (a modulation scheme, an encoding method, and the number of layers) applied to the resource units by the base station 20 (step S305). Here, the discrimination unit 433 may discriminate the signal processing parameters for each of resource units based on an arithmetic operation result of the arithmetic unit 44.

For example, the setting unit 441 of the arithmetic unit 44 sets an arithmetic model based on the information acquired in step S301. Then, the processing unit 442 of the arithmetic unit 44 inputs, to the arithmetic model set by the setting unit 441, the information concerning the resources acquired in step S302 and the information concerning the reception strength of the downlink reference signal acquired in step S303. An output from the arithmetic model is the signal processing parameters (the modulation scheme, the encoding method, and the number of layers) applied to each of the resource units by the base station 20.

Here, the information acquired in step S304 (the information concerning the signal processing parameters applied to one resource unit) can be information for giving a reference in an arithmetic operation by the arithmetic model or for calibration. By using the information serving as the reference, the terminal device 40 can relatively specify information concerning signal processing parameters applied to other resource units.

For example, the discrimination unit 433 compares the signal processing parameters (the signal processing parameters applied to one resource unit) acquired in step S304 with the signal processing parameters of a relevant resource unit among the signal processing parameters for each of resource units output from the arithmetic unit 44. Then, if the signal processing parameters coincide, the discrimination unit 433 sets the signal processing parameters for each of resource units output from the arithmetic unit 44 directly as a discrimination result. On the other hand, if the signal processing parameters do not coincide, the discrimination unit 433 causes the arithmetic unit 44 to perform the arithmetic operation again by finely adjusting the information concerning the reception strength of the downlink reference signal input to the arithmetic model. At this time, the acquisition unit 431 may acquire the information concerning the reception strength of the downlink reference signal again. The acquisition unit 431 may acquire the configuration of the arithmetic model and the information concerning the coefficients of the arithmetic model again. The discrimination unit 433 repeats this processing until the signal processing parameters coincide.

Note that the arithmetic model may be configured such that the signal processing parameters (the signal processing parameter applied to one resource unit) acquired in step S304 can be input to the arithmetic model. Then, the processing unit 442 of the arithmetic unit 44 inputs, to the arithmetic model set by the setting unit 441, the information concerning the resource acquired in step S302, the information concerning the reception strength of the downlink reference signal acquired in step S303, the one resource unit acquired in step S304, and the signal processing parameters applied to the resource unit. This also enables the discrimination unit 433 to discriminate the signal processing parameters for each of the resource units.

The communication control unit 434 of the control unit 43 executes predetermined signal processing (demultiplexing processing, demodulation processing, and the decoding processing) for each of the resource units based on the signal processing parameters discriminated in step S305 (step S306).

Note that, in step S304, the acquisition unit 431 may acquire the TBS in addition to or instead of acquiring the information concerning the signal processing parameters applied to the one resource unit. The acquired TBS is input to the arithmetic model set by the setting unit 441 in order to, in step S305, discriminate the signal processing parameters (the modulation scheme, the encoding method, and the number of layers) applied to the resource units.

According to the present embodiment, in addition to the effects of the first embodiment, improvement of discrimination accuracy of the signal processing parameters (the modulation scheme, the encoding method, and the number of layers) applied to the resource units can be expected.

### <4-4. Third Embodiment>

Subsequently, a third embodiment is explained.

As explained above, it is also conceivable that the signal processing parameters discriminated by the terminal device 40 are different from the signal processing parameters discriminated by the base station 20. In the third embodiment as well, the terminal device 40 acquires information concerning a part of signal processing parameters to be discriminated from the base station 20 in advance. The terminal device 40 improves discrimination accuracy of the signal processing parameters by using the information acquired in advance for discrimination.

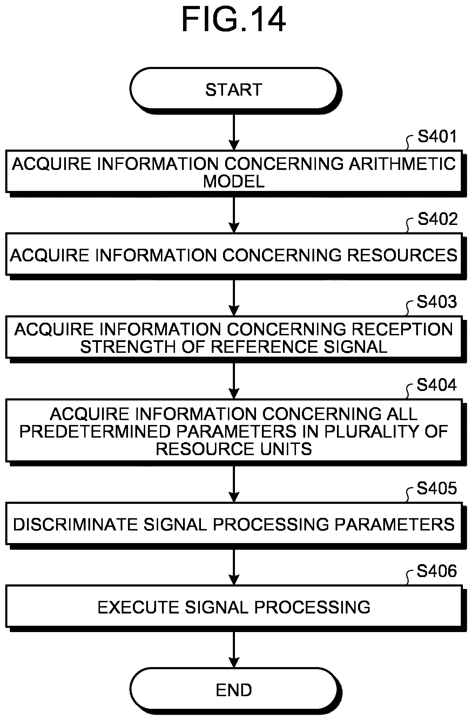

FIG. 14 is a flowchart illustrating an example of reception processing of the terminal device 40 according to the third embodiment. Note that an operation of the base station 20 is the same as the operation in the first embodiment except that information concerning a part of signal processing parameters is transmitted to the terminal device 40. Therefore, explanation of the operation is omitted. The operation of the terminal device 40 is explained below with reference to the flowchart of FIG. 14. The following processing is executed by, for example, the control unit 43 and the arithmetic unit 44 of the terminal device 40.

First, the acquisition unit 431 of the control unit 43 acquires a configuration of an arithmetic model and information concerning coefficients of the arithmetic model (step S401). Then, the acquisition unit 431 acquires information concerning resources allocated for reception of downlink data (step S402). In step S402, the acquisition unit 431 may acquire information concerning resource units relating to application of predetermined signal processing. Here, the predetermined signal processing includes at least one of demultiplexing processing, demodulation processing, and decoding processing.

Thereafter, the acquisition unit 431 receives a downlink reference signal from the base station 20 via the wireless communication unit 41. Then, the acquisition unit 431 acquires information concerning reception strength of the downlink reference signal based on the received downlink reference signal (step S403).

Further, the acquisition unit 431 acquires, from the base station 20, information concerning one parameter (hereinafter referred to as predetermined parameter) among a plurality of types of parameters included in the signal processing parameter, that is, information concerning all predetermined parameters of a plurality of resource units (step S404). At this time, the plurality of types of parameters may include a modulation scheme, an encoding method, and the number of layers. The predetermined parameter may be one of the modulation scheme, the encoding method, and the number of layers.

Note that the predetermined parameter may have the same value in all of the plurality of resource units. At this time, the other parameters of the plurality of types of parameters may have a different value for each of the resource units. For example, code rates may have the same value in all the resource units and other parameters (the modulation scheme and the number of layers) may have different values in the resource units. Naturally, the predetermined parameter is not limited to the code rate and may be the modulation scheme or the number of layers. By setting the predetermined parameter to the same value in the plurality of resource units, overheads of dedicated signaling can be reduced.

Then, the discrimination unit 433 of the control unit 43 discriminates the signal processing parameters (the modulation scheme, the encoding method, and the number of layers) applied to the resource units by the base station 20 (step S405). Here, the discrimination unit 433 may discriminate the signal processing parameters for each of resource units based on an arithmetic operation result of the arithmetic unit 44.

For example, the setting unit 441 of the arithmetic unit 44 sets an arithmetic model based on the information acquired in step S401. Then, the processing unit 442 of the arithmetic unit 44 inputs, to the arithmetic model set by the setting unit 441, the information concerning the resources acquired in step S402 and the information concerning the reception strength of the downlink reference signal acquired in step S403. An output from the arithmetic model is the signal processing parameters (the modulation scheme, the encoding method, and the number of layers) applied to each of the resource units by the base station 20.

Here, the information acquired in step S404 (the information concerning all the predetermined parameters of the plurality of resource units) can be information that provides a reference in the arithmetic operation by the arithmetic model. By using the information serving as the reference, the terminal device 40 can relatively specify information concerning signal processing parameters applied to other resource units.

For example, the discrimination unit 433 compares the signal processing parameters (all the predetermined parameters of the plurality of resource units) acquired in step S404 and the predetermined parameter among the signal processing parameters for each of the resource units output from the arithmetic unit 44. Then, if the signal processing parameters coincide, the discrimination unit 433 sets the signal processing parameters for each of resource units output from the arithmetic unit 44 directly as a discrimination result. On the other hand, if the signal processing parameters do not coincide, the discrimination unit 433 causes the arithmetic unit 44 to perform the arithmetic operation again by finely adjusting the information concerning the reception strength of the downlink reference signal input to the arithmetic model. At this time, the acquisition unit 431 may acquire the information concerning the reception strength of the downlink reference signal again. The acquisition unit 431 may acquire the configuration of the arithmetic model and the information concerning the coefficients of the arithmetic model again. The discrimination unit 433 repeats this processing until the signal processing parameters coincide.

Note that the arithmetic model may be configured such that the signal processing parameters (all the predetermined parameters of the plurality of resource units) acquired in step S404 can be input to the arithmetic model. Then, the processing unit 442 of the arithmetic unit 44 inputs, to the arithmetic model set by the setting unit 441, the information concerning the resources acquired in step S402, the information concerning the reception strength of the downlink reference signal acquired in step S403, and the predetermined parameter acquired in step S404. This also enables the discrimination unit 433 to discriminate the signal processing parameters for each of the resource units.

Further, the base station 20 may set one predetermined parameter for all of the plurality of resource units. When the predetermined parameter is the modulation scheme, the base station 20 sets, for example, 16QAM with the order of 4. When the predetermined parameter is the code rate, the base station 20 sets, for example, a range of 378/1024 or more and 438/1024. If the predetermined parameter is the number of layers, the base station 20 sets, for example, one layer.

The communication control unit 434 of the control unit 43 executes predetermined signal processing (demultiplexing processing, demodulation processing, and decoding processing) for each of the resource units based on the signal processing parameters discriminated in step S405 (step S406).

According to the present embodiment, in addition to the effects of the first embodiment, improvement of discrimination accuracy of the signal processing parameters (the modulation scheme, the encoding method, and the number of layers) applied to the resource units can be expected.

### <4-5. Fourth Embodiment>

Subsequently, a fourth embodiment is explained.

As explained above, it is also conceivable that the signal processing parameters discriminated by the terminal device 40 are different from the signal processing parameters discriminated by the base station 20. In the fourth embodiment, the terminal device 40 acquires, in advance, from the base station 20, information (for example, the number of adjacent resource units to which the same signal processing parameters are applied) serving as a characteristic of signal processing parameters to be discriminated. The terminal device 40 improves discrimination accuracy of the signal processing parameters by using the information acquired in advance for discrimination.

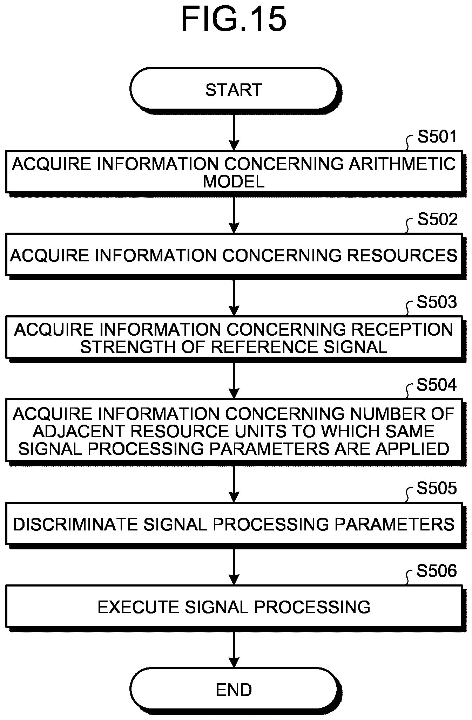

FIG. 15 is a flowchart illustrating an example of reception processing of the terminal device 40 according to the fourth embodiment. Note that an operation of the base station 20 is the same as the operation in the first embodiment except that the base station 20 transmits information serving as characteristics of the signal processing parameters to the terminal device 40. Therefore, explanation of the operation is omitted. An operation of the terminal device 40 is explained below with reference to the flowchart of FIG. 15. The following processing is executed by, for example, the control unit 43 and the arithmetic unit 44 of the terminal device 40.

First, the acquisition unit 431 of the control unit 43 acquires a configuration of an arithmetic model and information concerning coefficients of the arithmetic model (step S501). Then, the acquisition unit 431 acquires information concerning resources allocated for reception of downlink data (step S502). In step S502, the acquisition unit 431 may acquire information concerning resource units relating to application of predetermined signal processing. Here, the predetermined signal processing includes at least one of demultiplexing processing, demodulation processing, and decoding processing.

Thereafter, the acquisition unit 431 receives a downlink reference signal from the base station 20 via the wireless communication unit 41. Then, the acquisition unit 431 acquires information concerning reception strength of the downlink reference signal based on the received downlink reference signal (step S503).

Further, the acquisition unit 431 acquires, from the base station 20, information concerning the number of adjacent resource units to which the same signal processing parameters are applied (step S504). For example, when the same signal processing parameters (for example, a modulation scheme, an encoding method, and the number of layers) are applied to four adjacent resource elements, the acquisition unit 431 acquires 4 as the number of continuous resource units.

Then, the discrimination unit 433 of the control unit 43 discriminates the signal processing parameters (the modulation scheme, the encoding method, and the number of layers) applied to the resource units by the base station 20 (step S505). Here, the discrimination unit 433 may discriminate the signal processing parameters for each of resource units based on an arithmetic operation result of the arithmetic unit 44.

For example, the setting unit 441 of the arithmetic unit 44 sets an arithmetic model based on the information acquired in step S501. Then, the processing unit 442 of the arithmetic unit 44 inputs, to the arithmetic model set by the setting unit 441, the information concerning the resources acquired in step S502 and the information concerning the reception strength of the downlink reference signal acquired in step S503. An output from the arithmetic model is the signal processing parameters (the modulation scheme, the encoding method, and the number of layers) applied to each of the resource units by the base station 20.

Here, the information (the information concerning the number of adjacent resource units to which the same signal processing parameters are applied) acquired in step S504 can be information that provides a reference in an arithmetic operation by the arithmetic model. By using the information serving as the reference, the terminal device 40 can relatively specify information concerning signal processing parameters applied to other resource units.

For example, the discrimination unit 433 discriminates whether the same signal processing parameters are present by the number acquired in step S504 (hereinafter referred to as predetermined number) among the signal processing parameters for each of the resource units output from the arithmetic unit 44. When the same signal processing parameters are present by the predetermined number, the discrimination unit 433 sets the signal processing parameters for each of the resource units output from the arithmetic unit 44 directly as a discrimination result. On the other hand, if downlink reference signals are not present by the predetermined number, the discrimination unit 433 causes the arithmetic unit 44 to perform the arithmetic operation again by, for example, finely adjusting the information concerning the reception strength of the downlink reference signal input to the arithmetic model. At this time, the acquisition unit 431 may acquire the information concerning the reception strength of the downlink reference signal again. The acquisition unit 431 may acquire the configuration of the arithmetic model and the information concerning the coefficients of the arithmetic model again. The discrimination unit 433 repeats this processing until the signal processing parameters coincide.

Note that the arithmetic model may be configured such that the signal processing parameters (the information concerning the number of adjacent resource units to which the same signal processing parameters are applied) acquired in step S504 can be input to the arithmetic model. Then, the processing unit 442 of the arithmetic unit 44 inputs, to the arithmetic model set by the setting unit 441, the information concerning the resources acquired in step S402, the information concerning the reception strength of the downlink reference signal acquired in step S403, and the information acquired in step S504. This also enables the discrimination unit 433 to discriminate the signal processing parameters for each of the resource units.

The communication control unit 434 of the control unit 43 executes the predetermined signal processing (the demultiplexing processing, the demodulation processing, and the decoding processing) for each of the resource units based on the signal processing parameters discriminated in step S505 (step S406).

According to the present embodiment, in addition to the effects of the first embodiment, improvement of discrimination accuracy of the signal processing parameters (the modulation scheme, the encoding method, and the number of layers) applied to the resource units can be expected.

### <4-6. Fifth Embodiment>

Subsequently, a fifth embodiment is explained.

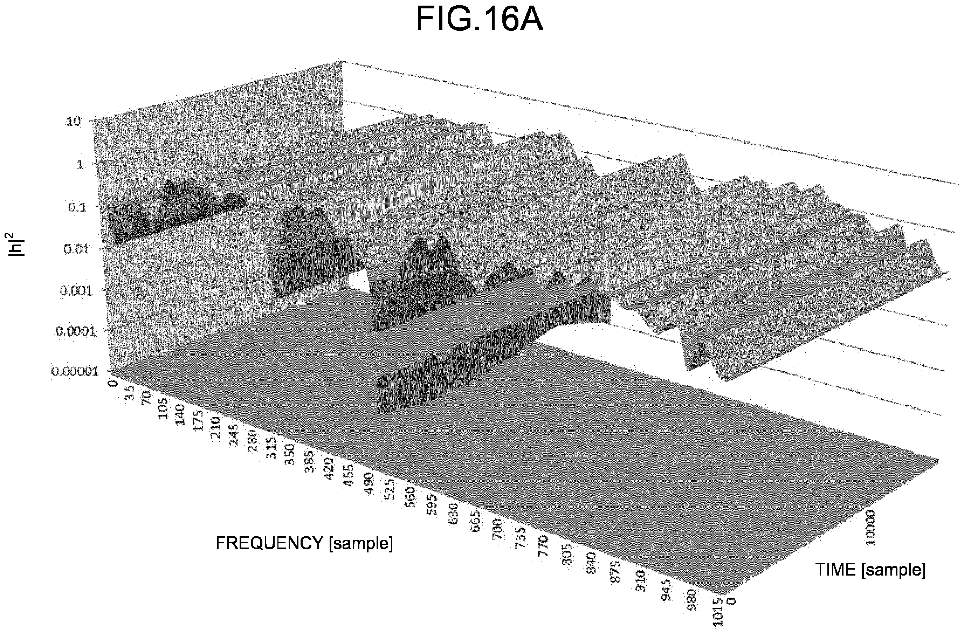

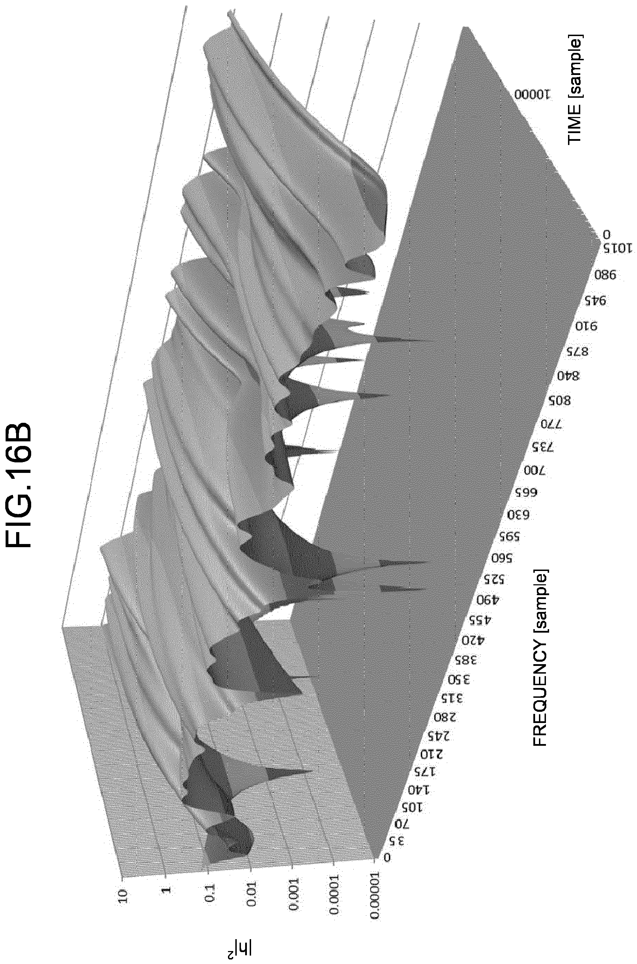

A state of a propagation channel varies depending on mobility of the terminal device 40. FIG. 16A and FIG. 16B are diagrams illustrating a relation between the mobility and the propagation channel. FIG. 16A is a diagram illustrating a state of the propagation channel in the case in which moving speed of the terminal device 40 is 3 km/h. FIG. 16B is a diagram illustrating a state of the propagation channel in the case in which the moving speed is 300 km/h.

In an example illustrated in FIG. 16A, a change in the state of the propagation channel in ae time direction due to fading is small. On the other hand, in an example illustrated in FIG. 16B, the change in the state of the propagation channel in the time direction due to fading is large. A frequency of a dip of a reception S/N called notch also changes. Accordingly, when different signal processing parameters (a modulation scheme, an encoding method, and the number of layers) are applied for each of finer resource units, there is a concern that the change in the frequency of the notch due to the fading causes deterioration in reception performance of the terminal device 40.

Therefore, in the fifth embodiment, the base station 20 controls resource units according to the mobility of the terminal device 40. For example, when it is determined that the mobility of the terminal device 40 is smaller than a predetermined reference (for example, a case of FIG. 16A), the base station 20 reduces the resource units such that frequencies can be efficiently used. On the other hand, when it is determined that the mobility of the terminal device 40 is larger than the predetermined reference (for example, a case of FIG. 16B), the base station 20 increases the resource units to absorb the influence of the fading.

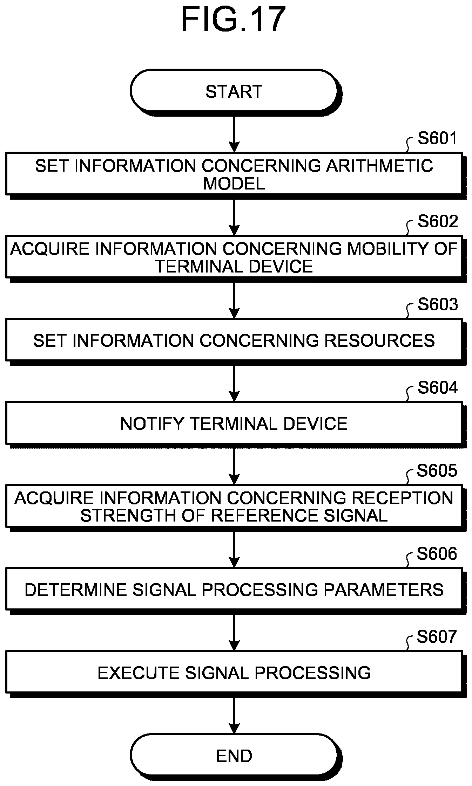

FIG. 17 is a flowchart illustrating an example of transmission processing of the base station 20 according to the fifth embodiment. Note that an operation of the terminal device 40 is the same as the operation in the first to fourth embodiments except that information concerning the mobility of the terminal device 40 is transmitted to the base station 20. Therefore, explanation of the operation is omitted. An operation of the base station 20 is explained below with reference to the flowchart of FIG. 17. Processing explained below is executed by, for example, the control unit 23 and the arithmetic unit 24 of the base station 20.

First, the setting unit 232 of the control unit 23 sets a configuration of an arithmetic model and information concerning coefficients of the arithmetic model (step S601) .

Subsequently, the acquisition unit 231 of the control unit 23 acquires information concerning the mobility of the terminal device 40 via the wireless communication unit 21 (step S602). As a method of acquiring the information concerning the mobility, various methods are conceivable.

For example, as the method of acquiring the information concerning the mobility, a method in which the terminal device 40 reports the information concerning the mobility to the base station 20 is conceivable.

At this time, the information concerning the mobility reported by the terminal device 40 may be a UE mobility state. The UE mobility state transitions to a normal-mobility state, a medium-mobility state, or a high-mobility state according to the number of cell changes that occur within a designated period.

When the terminal device 40 is equipped with a GNSS (Global Navigation Satellite System) represented by a GPS (Global Positioning System), the terminal device 40 detects its own position at a fixed or variable cycle and calculates moving speed based on a change in the position. Then, the terminal device 40 may report the calculated moving speed as the information concerning the mobility. Note that, when the terminal device 40 or a device (for example, a vehicle) equipped with the terminal device 40 has a function of detecting moving speed, the terminal device 40 may report the detected moving speed as the information concerning the mobility.

As the method of acquiring the information concerning the mobility, a method in which the base station 20 calculates mobility of the terminal device 40 is also conceivable. For example, the base station 20 acquires information concerning a dynamic position of the terminal device 40 via an LMF (Location Management Function) and calculates the mobility of the terminal device 40.

The LMF acquires information concerning the position of the terminal device 40 with a positioning technique called OTDOA (Observed Time Difference Of Arrival), Multi-RTT (Round Trip Time), DL AoD (Downlink Angle-of-Departure), DL TDOA (Downlink Time Difference of Arrival), UL TDOA (Uplink Time Difference of Arrival), or UL AoA (Angle of Arrival) or a positioning technique using a CID (Cell ID).

For example, in the OTDOA, the terminal device 40 receives downlink PRSs (Positioning Reference Signals) from a plurality of TPs (Transmission Points) and reports measurement values concerning physical cell IDs, global cell IDs, TP IDs, and timings of the PRSs to the LMF via an LPP (LTE Positioning Protocol) to thereby calculate a position of the terminal device 40 based on information concerning known coordinates of the TPs where the LMF is measured and relative timing of the reported PRSs.

For example, in the positioning using the CID, the LMF calculates the position of the terminal device 40 based on information concerning known coordinates of ng-eNB or gNB and measurement results explained below reported from the terminal device 40. The terminal device 40 reports, for example, measurement results concerning an ECGI (Evolved Cell Global Identifier) or a Physical Cell ID, RSRP (Reference Signal Received Power), an RSRQ (Reference Signal Received Quality), and a UE Rx-Tx time difference to the LMF. Here, the UE Rx-Tx time difference is defined as a time difference between transmission timing of the terminal device 40 and transmission timing of the terminal device 40.

The acquisition unit 231 may acquire information concerning mobility using an arithmetic model. For example, the arithmetic unit 24 of the base station 20 inputs, to the CNN, reception strength of an uplink reference signal allocated over a frequency axis and a time axis. The CNN outputs information concerning mobility based on characteristics of two-dimensional information concerning the reception strength of the uplink reference signal. The acquisition unit 231 acquires the output information as information concerning the mobility of the terminal device 40.

Subsequently, the setting unit 232 sets information concerning resources for downlink data transmission (step S603). For example, this information is notified from the base station 20 to the terminal device 40 via downlink control information.

Note that, in step S603, the setting unit 232 may set information concerning resource units relating to application of predetermined signal processing. At this time, the setting unit 232 sets, based on the mobility of the terminal device 40, resource units to which different signal processing parameters (modulation schemes, encoding methods, and the numbers of layers) are applied. Here, the setting unit 232 sets a small resource unit when the mobility of the terminal device 40 is small and sets a large resource unit when the mobility of the terminal device 40 is large.

The notification unit 233 of the control unit 23 notifies the terminal device 40 of the information concerning the resource units (step S604). Then, the acquisition unit 231 of the control unit 23 receives an uplink reference signal from the terminal device 40 via the wireless communication unit 21. Then, the acquisition unit 231 acquires information concerning reception strength of the uplink reference signal based on the received uplink reference signal (step S605).

Then, the determination unit 234 of the control unit 23 determines signal processing parameters (a modulation scheme, an encoding method, and the number of layers) applied to the resource units (step S606). At this time, the determination unit 234 may determine the signal processing parameters for each of resource units based on an arithmetic operation result of the arithmetic unit 24.

Then, the communication control unit 235 of the control unit 23 executes predetermined signal processing (modulation processing, encoding processing, and multiplexing processing) for each of the resource units based on the signal processing parameters determined in step S606 (step S607).

Note that, in step S604, the notification unit 233 of the control unit 23 may notify the terminal device 40 of information concerning resource units corresponding to a plurality of kinds of mobility. The terminal device 40 may determine, based on the mobility detected by the terminal device 40, resource units to which the same signal processing parameters are applied.

The embodiment in which the signal processing parameters are determined according to the mobility of the terminal device 40 is explained above. However, mobility information of the base station 20 and an attribute of the base station 20 may be used to determine the signal processing parameters. For example, when a low earth orbiting satellite is the base station 20, since the low earth orbiting satellite is moving at high speed in the sky, a change in a state of a propagation channel in a time direction due to fading is large. Therefore, mobility information of the base station 20 or attribute information of the base station 20 such as a low earth orbiting satellite, a geostationary earth orbiting satellite, or a ground base station may be used to determine the signal processing parameters. These kinds of information may be notified to the terminal device 40.

According to the present embodiment, it is possible to perform transmission and reception with reduced influence of fading.

### <<5. Modifications>>

The embodiments explained above indicate examples and various changes and applications are possible.

For example, in the first to fifth embodiments explained above, the base station 20 executes the downlink data transmission processing and the terminal device 40 executes the downlink data reception processing. However, the first to fifth embodiments explained above can be modified to transmission and reception of uplink data.

For example, the base station 20 sets resource units relating to application of predetermined signal processing (for example, modulation processing, encoding processing, and multiplexing processing) and notifies the terminal device 40 of the resource units. The terminal device 40 acquires, from the base station, information concerning resources and resource units allocated for transmission of uplink data and specifies signal processing parameters (for example, a modulation scheme, an encoding method, and the number of layers) applied to the resources allocated for each of the resource units. At this time, the terminal device 40 may specify signal processing parameters using an arithmetic model. Then, the terminal device 40 performs signal processing for the uplink data using the specified signal processing parameters for each of the resource units. Then, the base station 20 discriminates the signal processing parameters for each of the resource units. At this time, the base station 20 may discriminate the signal processing parameters using the arithmetic model. Then, the base station 20 performs signal processing for the uplink data received from the terminal device 40 using the discriminated signal processing parameters for each of the resource units. Even in the case of this modification, it is possible to execute optimum encoding processing, modulation processing, and multiplexing processing for each of the resource units. Consequently, the frequency use efficiency is improved.

For example, in first to fifth embodiments explained above, the base station 20 executes the transmission processing for the relink data and the terminal device 40 executes the reception processing for the downlink data. However, the first to fifth embodiments explained above can be modified to transmission and reception of side-link data.

For example, the terminal device 40 sets resource units relating to application of predetermined signal processing (for example, modulation processing, encoding processing, and multiplexing processing) and notifies another terminal device xx of the resource units. The other terminal device xx acquires, from the terminal device 40, information concerning resources and resource units allocated for the transmission of the side-link data and specifies signal processing parameters (for example, a modulation scheme, an encoding method, and the number of layers) applied to the resource allocated for each of the resource units. At this time, the other terminal device xx may specify the signal processing parameters using an arithmetic model. Then, the other terminal device xx performs signal processing for the side-link data using the specified signal processing parameters for each of the resource units. Then, the terminal device 40 discriminates the signal processing parameters for each of the resource units. At this time, the terminal device 40 may discriminate the signal processing parameters using an arithmetic model. Then, the terminal device 40 performs signal processing for the side-link data received from the other terminal device xx using the discriminated signal processing parameters for each of the resource units. Even in the case of this modification, it is possible to execute optimum encoding processing, modulation processing, and multiplexing processing for each of the resource units. Consequently, the frequency use efficiency is improved.

In the first to fifth embodiments explained above, when receiving the downlink data corresponding to one TB (Transport Block), the terminal device 40 specifies the signal processing parameters applied to the downlink data by itself using the arithmetic model or the like. However, a method with which the terminal device 40 discriminates the signal processing parameters is not limited to this. For example, the base station 20 may notify, for each of the TBs or for each of the resource units, the terminal device 40 of the signal processing parameters applied to the downlink data.

Note that whether the terminal device 40 specifies the signal processing parameters by itself or acquires the signal processing parameters from the base station 20 may be dynamically and selectively controlled based on a notification from the base station 20. For example, the base station 20 sets this receiving method based on UE Radio Capability information sent from the terminal device 40. That is, the UE Radio Capability information includes information indicating whether the terminal device 40 has capability of, without the base station 20 notifying signal processing parameters applied to each of the resource units, specifying and receiving the applied signal processing parameters by itself. Then, the terminal device 40 discriminates the signal processing parameters based on the set reception method.

Whether the terminal device 40 specifies the signal processing parameters by itself or acquires the signal processing parameters from the base station 20 may be controlled according to an operating frequency. Here, the operating frequency may be a classification of a frequency band such as an NR-ARFCN (NR-Absolute Radio Frequency Channel Number), a band number, FR1, or FR2, a BWP-ID, or a classification of a type of an operating frequency, for example, a licensed frequency (a license frequency), a shared frequency, or an unlicensed frequency (an un-license frequency).

In the embodiments explained, the base station 20 determines resource units. However, the terminal device 40 or the relay station 30 may determine resource units. A device different from a communication device (for example, the base station 20, the relay station 30, or the terminal device 40) that performs signal processing may determine resource units. For example, the management device 10 may determine resource units used in communication between the base station 20 and the terminal device 40. Then, the management device 10 may notify the base station 20 and/or the terminal device 40 of a determined signal processing scheme. The base station 20 and/or the terminal device 40 may determine resource units used for communication based on information concerning the resource units notified from the management device 10.

The management device 10 may store capability information concerning resource units of the terminal device 40. At this time, the capability information may include information indicating whether the terminal device 40 can change the resource units. Then, the management device 10 may notify the base station 20 of the capability information. Then, the base station 20 may determine, based on the capability information received from the management device 10, a notification method for signal processing parameters and resource units used for communication with the terminal device 40.

In the embodiments explained above, the base station 20 determines the signal processing parameters (for example, the modulation scheme, the encoding method, and the number of layers) based on the information concerning the state of the propagation channel. Here, the information of the state of the propagation channel is not limited to the S/N of the uplink reference signal. For example, the information of the state of the propagation channel may be a measurement result of a downlink reference signal fed back from the terminal device 40.

A control device that controls the management device 10, the base station 20, the relay station 30, and the terminal device 40 in the present embodiments may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the program is installed in a computer and the control device is configured by executing the processing explained above. At this time, the control device may be a device (for example, a personal computer) on the outside of the management device 10, the base station 20, the relay station 30, and the terminal device 40. The control device may be a device (for example, the control unit 13, the control unit 23, the control unit 33, the control unit 43, the arithmetic unit 24, the arithmetic unit 34, or the arithmetic unit 44) on the inside of the management device 10, the base station 20, the relay station 30, or the terminal device 40.

The communication program explained above may be stored in a disk device included in a server device on a network such as the Internet such that the communication program can be downloaded to a computer. The functions explained above may be realized by cooperation of an OS (Operating System) and application software. In this case, a portion other than the OS may be stored in a medium and distributed or a portion other than the OS may be stored in the server device and downloaded to the computer.

Among the processing explained in the embodiment, all or a part of the processing explained as being automatically performed can be manually performed or all or a part of the processing explained as being manually performed can be automatically performed by a known method. Besides, the processing procedure, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically configured as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing the processing contents to contradict one another. Furthermore, the order of the steps illustrated in the flowchart of the embodiment explained above can be changed as appropriate.

For example, the present embodiment can be realized as any component configuring a device or a system, for example, a processor functioning as a system LSI (Large Scale Integration) or the like, a module that uses a plurality of processors or the like, a unit that uses a plurality of modules or the like, or a set obtained by further adding other functions to the unit (that is, a component as a part of the device).

Note that, in the present embodiment, the system means a set of a plurality of components (devices, modules (parts), and the like) It does not matter whether all the components are present in the same housing. Therefore, both of a plurality of devices housed in separate housings and connected via a network and one device in which a plurality of modules are housed in one housing are systems.

For example, the present embodiment can adopt a configuration of cloud computing in which one function is shared and processed by a plurality of devices in cooperation via a network.

### <<6. Conclusion>>

As explained above, according to an embodiment of the present disclosure, the base station 20 sets resource units relating to application of predetermined signal processing including at least one signal processing among modulation processing, encoding processing, and multiplexing processing. Then, the base station 20 notifies the terminal device 40 of information concerning the resource units. The terminal device 40 acquires, from the base station 20, the information concerning the resource units relating to the application of the predetermined signal processing and discriminates signal processing parameters including at least one of a modulation scheme, an encoding method, and the number of layers for each of resource units.

Consequently, since the signal processing parameters can be changed in any unit (for example, a unit smaller than a TB), for example, even if a situation in which reception quality greatly changes within frequency resources allocated to one TB occurs, the base station 20 and the terminal device 40 can communicate using optimum signal processing parameters. As a result, further efficient use of frequencies is realized.

Although the embodiments of the present disclosure explained above, the technical scope of the present disclosure is not limited to the embodiments per se. Various changes can be made without departing from the gist of the present disclosure. Components in different embodiments and modifications may be combined as appropriate.

The effects in the embodiments described in this specification are only illustrations and are not limited. Other effects may be present.

"Discriminate" in this specification may be "specify". The "discriminate" and "specify" may be "identify", "select", "be expected", "interpret", and "assume".

Note that the present technique can also take the following configurations.
(1) A communication device comprising:
   an acquisition unit that acquires, from another communication device, information concerning a second resource configured from a plurality of first resources; and
   a discrimination unit that discriminates, based on the information concerning the second resource, signal processing parameters including information concerning at least one of a modulation scheme, an encoding method, and a number of layers applied to each of the first resources.
(2) The communication device according to (1), wherein
   the acquisition unit acquires information concerning a state of a propagation channel used for wireless communication, and
   the discrimination unit discriminates the signal processing parameters for each of the first resources based on the information concerning the state of the propagation channel.
(3) The communication device according to (2), wherein
   the acquisition unit acquires, as the information concerning the state of the propagation channel, information concerning reception strength of a reference signal transmitted via the propagation channel, and
   the discrimination unit discriminates the signal processing parameters for each of the first resources based on the information concerning the reception strength of the reference signal.
(4) The communication device according to (3), wherein
   the other communication device is a base station that sets the signal processing parameters for each of the first resources and transmits downlink data, and
   the discrimination unit discriminates, based on the information concerning the reception strength of the reference signal transmitted from the base station via the propagation channel, the signal processing parameters set for each of the first resources by the base station.
(5) The communication device according to (4), wherein
   the acquisition unit acquires, from the base station, information concerning an arithmetic model having, as an input, at least the information concerning the reception strength of the reference signal transmitted via the propagation channel and having, as an output, at least the information concerning the signal processing parameters, and
   the discrimination unit discriminates, by inputting, to the arithmetic model, the information concerning the reception strength of the reference signal transmitted from the base station via the propagation channel, the signal processing parameters set for each of the first resources by the base station.
(6) The communication device according to (5), wherein
   the acquisition unit acquires, from the base station, information concerning the signal processing parameters applied to one first resource among the plurality of first resources, and
   the discrimination unit discriminates, based on the information concerning the reception strength of the reference signal transmitted from the base station via the propagation channel and the information concerning the signal processing parameters applied to the one first resource among the plurality of first resources, the signal processing parameters set for each of the first resources by the base station.
(7) The communication device according to (5), wherein
   the acquisition unit acquires, from the base station, information concerning a predetermined parameter, which is one parameter among a plurality of types of parameters included in the signal processing parameters, the information being information concerning all of the predetermined parameters of the plurality of first resources, and
   the discrimination unit discriminates, based on the information concerning the reception strength of the reference signal transmitted from the base station via the propagation channel and the information concerning all of the signal processing parameters of the plurality of first resources, the signal processing parameters set for each of the first resources by the base station.
(8) The communication device according to (7), wherein the predetermined parameter is one of the modulation scheme, the encoding method, and the number of layers.
(9) The communication device according to (7) or (8), wherein the predetermined parameter has a same value in all of the plurality of first resources.
(10) The communication device according to (5), wherein
   the acquisition unit acquires, from the base station, information concerning a number of adjacent first resources to which the same signal processing parameters are applied, and
   the discrimination unit discriminates, by inputting, to the arithmetic model, the information concerning the reception strength of the reference signal transmitted from the base station via the propagation channel and the information concerning the number of adjacent first resources to which the same signal processing parameter is applied, the signal processing parameters set to each of the first resources by the base station.
(11) The communication device according to any one of (1) to (10), wherein
   the first resource is a subcarrier, a resource element, or a resource block, and
   the discrimination unit discriminates the subcarrier, the resource element, or at least one of a modulation scheme, an encoding method, and a number of layers applied for each of resource blocks.
(12) The communication device according to any one of (1) to (11), wherein the acquisition unit acquires the information concerning the first resource via system information or dedicated signaling.
(13) A communication device comprising a transmission unit that transmits information concerning a second resource to another communication device that discriminates signal processing parameters including information concerning at least one of a modulation scheme, an encoding method, and a number of layers applied to each of first resources based on the information concerning the second resource including a plurality of the first resources.
(14) The communication device according to (13), further comprising an acquisition unit that acquires information concerning mobility of the other communication device, wherein
   the setting unit sets the first resources having different sizes according to the mobility of the other communication device.
(15) The communication device according to (13) or (14), further comprising a determination unit that determines signal processing parameters including at least one of a modulation scheme, an encoding method, and a number of layers for each of the first resources.
(16) The communication device according to (15), wherein
   the other communication device is a terminal device that receives downlink data transmitted by the communication device, and
   the determination unit determines the signal processing parameters set for each of the first resources in the transmission of the downlink data based on information concerning reception strength of a reference signal transmitted from the terminal device via a propagation channel.
(17) A communication method, comprising:
   acquiring, from another communication device, information concerning a second resource configured from a plurality of first resources; and
   discriminating, based on the information concerning the second resource, signal processing parameters including information concerning at least one of a modulation scheme, an encoding method, and a number of layers applied for each of the first resources.
(18) A communication method, comprising:
   transmitting information concerning a second resource to another communication device that discriminates signal processing parameters including information concerning at least one of a modulation scheme, an encoding method, and a number of layers applied for each of first resources based on the information concerning the second resource configured from a plurality of the first resources.
(19) A communication system, comprising a base station and a terminal device, wherein
   the base station includes:
   a transmission unit that transmits information concerning a second resource configured from a plurality of first resources to the terminal device, and
   the terminal device includes:
      an acquisition unit that acquires, from the base station, the information concerning the second resource configured from the plurality of first resources; and
      a discrimination unit that discriminates, based on the information concerning the second resource, signal processing parameters including information concerning at least one of a modulation scheme, an encoding method, and a number of layers applied to each of the first resources.

### Reference Signs List

1 COMMUNICATION SYSTEM
10 MANAGEMENT DEVICE
20 BASE STATION
30 RELAY STATION
40 TERMINAL DEVICE
11 COMMUNICATION UNIT
21, 31, 41 WIRELESS COMMUNICATION UNIT
12, 22, 32, 42 STORAGE UNIT
13, 23, 33, 43 CONTROL UNIT
24, 34, 44 ARITHMETIC UNIT
211, 311, 411 TRANSMISSION PROCESSING UNIT
212, 312, 412 RECEPTION PROCESSING UNIT
213, 313, 413 ANTENNA
231, 431 ACQUISITION UNIT
232, 241, 432, 441 SETTING UNIT
233 NOTIFICATION UNIT
234 DETERMINATION UNIT
235, 434 COMMUNICATION CONTROL UNIT
433 DISCRIMINATION UNIT
242, 442 PROCESSING UNIT
243 EXTRACTION UNIT
443 SPECIFYING UNIT

## Claims

1. A communication device comprising:
an acquisition unit that acquires, from another communication device, information concerning a second resource configured from a plurality of first resources; and
a discrimination unit that discriminates, based on the information concerning the second resource, signal processing parameters including information concerning at least one of a modulation scheme, an encoding method, and a number of layers applied to each of the first resources.

2. The communication device according to claim 1, wherein
the acquisition unit acquires information concerning a state of a propagation channel used for wireless communication, and
the discrimination unit discriminates the signal processing parameters for each of the first resources based on the information concerning the state of the propagation channel.

3. The communication device according to claim 2, wherein
the acquisition unit acquires, as the information concerning the state of the propagation channel, information concerning reception strength of a reference signal transmitted via the propagation channel, and
the discrimination unit discriminates the signal processing parameters for each of the first resources based on the information concerning the reception strength of the reference signal.

4. The communication device according to claim 3, wherein
the other communication device is a base station that sets the signal processing parameters for each of the first resources and transmits downlink data, and
the discrimination unit discriminates, based on the information concerning the reception strength of the reference signal transmitted from the base station via the propagation channel, the signal processing parameters set for each of the first resources by the base station.

5. The communication device according to claim 4, wherein
the acquisition unit acquires, from the base station, information concerning an arithmetic model having, as an input, at least the information concerning the reception strength of the reference signal transmitted via the propagation channel and having, as an output, at least the information concerning the signal processing parameters, and
the discrimination unit discriminates, by inputting, to the arithmetic model, the information concerning the reception strength of the reference signal transmitted from the base station via the propagation channel, the signal processing parameters set for each of the first resources by the base station.

6. The communication device according to claim 5, wherein
the acquisition unit acquires, from the base station, information concerning the signal processing parameters applied to one first resource among the plurality of first resources, and
the discrimination unit discriminates, based on the information concerning the reception strength of the reference signal transmitted from the base station via the propagation channel and the information concerning the signal processing parameters applied to the one first resource among the plurality of first resources, the signal processing parameters set for each of the first resources by the base station.

7. The communication device according to claim 5, wherein
the acquisition unit acquires, from the base station, information concerning a predetermined parameter, which is one parameter among a plurality of types of parameters included in the signal processing parameters, the information being information concerning all of the predetermined parameters of the plurality of first resources, and
the discrimination unit discriminates, based on the information concerning the reception strength of the reference signal transmitted from the base station via the propagation channel and the information concerning all of the signal processing parameters of the plurality of first resources, the signal processing parameters set for each of the first resources by the base station.

8. The communication device according to claim 7, wherein the predetermined parameter is one of the modulation scheme, the encoding method, and the number of layers.

9. The communication device according to claim 7, wherein the predetermined parameter has a same value in all of the plurality of first resources.

10. The communication device according to claim 5, wherein
the acquisition unit acquires, from the base station, information concerning a number of adjacent first resources to which the same signal processing parameters are applied, and
the discrimination unit discriminates, by inputting, to the arithmetic model, the information concerning the reception strength of the reference signal transmitted from the base station via the propagation channel and the information concerning the number of adjacent first resources to which the same signal processing parameter is applied, the signal processing parameters set to each of the first resources by the base station.

11. The communication device according to claim 1, wherein
the first resource is a subcarrier, a resource element, or a resource block, and
the discrimination unit discriminates the subcarrier, the resource element, or at least one of a modulation scheme, an encoding method, and a number of layers applied for each of resource blocks.

12. The communication device according to claim 1, wherein the acquisition unit acquires the information concerning the first resource via system information or dedicated signaling.

13. A communication device comprising a transmission unit that transmits information concerning a second resource to another communication device that discriminates signal processing parameters including information concerning at least one of a modulation scheme, an encoding method, and a number of layers applied to each of first resources based on the information concerning the second resource including a plurality of the first resources.

14. The communication device according to claim 13, further comprising an acquisition unit that acquires information concerning mobility of the other communication device, wherein
the setting unit sets the first resources having different sizes according to the mobility of the other communication device.

15. The communication device according to claim 13, further comprising a determination unit that determines signal processing parameters including at least one of a modulation scheme, an encoding method, and a number of layers for each of the first resources.

16. The communication device according to claim 15, wherein
the other communication device is a terminal device that receives downlink data transmitted by the communication device, and
the determination unit determines the signal processing parameters set for each of the first resources in the transmission of the downlink data based on information concerning reception strength of a reference signal transmitted from the terminal device via a propagation channel.

17. A communication method, comprising:
acquiring, from another communication device, information concerning a second resource configured from a plurality of first resources; and
discriminating, based on the information concerning the second resource, signal processing parameters including information concerning at least one of a modulation scheme, an encoding method, and a number of layers applied for each of the first resources.

18. A communication method, comprising:
transmitting information concerning a second resource to another communication device that discriminates signal processing parameters including information concerning at least one of a modulation scheme, an encoding method, and a number of layers applied for each of first resources based on the information concerning the second resource configured from a plurality of the first resources.

19. A communication system, comprising a base station and a terminal device, wherein
the base station includes:
a transmission unit that transmits information concerning a second resource configured from a plurality of first resources to the terminal device, and
the terminal device includes:
an acquisition unit that acquires, from the base station, the information concerning the second resource configured from the plurality of first resources; and
a discrimination unit that discriminates, based on the information concerning the second resource, signal processing parameters including information concerning at least one of a modulation scheme, an encoding method, and a number of layers applied to each of the first resources.
